# EUROPÄISCHE PATENTSCHRIFT

(11) **EP 2 835 413 B1**
(45) Veröffentlichungstag und Bekanntmachung des Hinweises auf die Patenterteilung: **17.04.2019**
(21) Anmeldenummer: 14180275.1
(22) Anmeldetag: 07.08.2014
(51) Int. Cl.: C10L 9/08, C10L 5/40

(54) **PARTIKEL EINES KOHLEÄHNLICHEN FESTSTOFFS, VERWENDUNGEN UND HERSTELLUNGSVERFAHREN**
PARTICLES OF A COAL-LIKE SOLID, USES AND METHOD FOR MANUFACTURING THE SAME
PARTICULE D'UNE MATIÈRE SOLIDE SIMILAIRE AU CHARBON, UTILISATIONS ET PROCÉDÉ DE FABRICATION

(30) Priorität: 07.08.2013 DE 102013013085
(43) Veröffentlichungstag der Anmeldung: 11.02.2015
(73) Patentinhaber: Eurofoam Deutschland GmbH Schaumstoffe, 65203 Wiesbaden (DE)
(72) Erfinder: Bettinger, Herbert, 66606 St. Wendel (DE); Bottlinger, Michael, 66606 St. Wendel (DE); Mildenberger, Moritz, 68549 IIvesheim (DE)
(74) Vertreter: Rasch, Michael

(56) Entgegenhaltungen:
- WO-A1-2010/092040
- WO-A1-2013/117600
- WO-A2-2013/171248
- US-A1- 2009 199 425

## Beschreibung

Die Erfindung betrifft Verfahren zur Herstellung von Partikeln eines kohleähnlichen Feststoffs, entsprechende Partikel, sowie deren Verwendungen und entsprechende Produkte, die entsprechende Partikel umfassen.

### Hintergrund der Erfindung

Die künstliche Nachbildung der natürlichen Kohleentstehung ist seit langem Gegenstand der Forschung. Im Jahre 1913 versuchte der deutsche Chemiker Friedrich Bergius den Prozess der natürlichen Kohleentstehung künstlich nachzubilden, indem er Biomasse in wässriger Umgebung erhöhter Temperatur und erhöhtem Druck aussetzte und innerhalb weniger Stunden ein braunkohleähnliches Material erhielt (Bergius, Die Anwendung hoher Drücke bei chemischen Vorgängen und eine Nachbildung der Steinkohle, 1913, Habilitationsschrift, Knapp, Halle/Saale). Im Jahr 2006 wurde dieser Forschungsgegenstand durch Prof. Antonietti und seine Gruppe am Max-Planck-Institut für Kolloid- und Grenzflächenforschung in Potsdam (Deutschland) als hydrothermale Karbonisierung wiederbelebt. Angesichts der globalen Problematik der Klimaerwärmung und der sich daraus ergebenden Aufgabe, Kohlenstoff möglichst effizient zu verwenden und dessen Freisetzung als Treibhausgas in Form vom Kohlendioxid oder Methan zu minimieren, wurden in der Folgezeit Verfahren und Vorrichtungen zur hydrothermalen Karbonisierung entwickelt.

### Stand der Technik

Die WO 2008/113309 beschreibt ein Verfahren zur nasschemischen Umwandlung von Biomasse durch hydrothermale Karbonisierung, wobei das Verfahren in einem Reaktionsvolumen unterhalb der Erdoberfläche durchgeführt wird. Die WO 2009/127727 beschreibt die Herstellung eines kohleähnlichen Materials aus Biomasse unter Verwendung eines Polymerisationsinitiators. Die WO 2008/138637 beschreibt ein Verfahren zum Betreiben einer Anlage zur hydrothermalen Karbonisierung von Biomasse sowie eine zugehörige Vorrichtung. Die WO 2010/ 0066881 beschreibt ein Verfahren zur Herstellung eines hydrothermalen Hybridmaterials durch Zugabe einer copolymerisierbaren Verbindung zu Biomasse. Die WO 2010/092040 beschreibt ein Verfahren zur Herstellung eines kohleähnlichen Materials aus Biomasse unter Verwendung vom Dampf im Gegenstromverfahren. Die EP 1 970 431 A1 betrifft ein Verfahren und eine zugehörige Vorrichtung für eine hydrothermale Karbonisierung. Die EP 2 130 893 A2 beschreibt ein Verfahren zur hydrothermalen Karbonisierung von Biomasse, wobei diese vorab entwässert und gegebenenfalls angesäuert wird, und wobei die Prozessabwärme zum Trocknen des entstandenen Produkts verwendet wird. Die DE 10 2008 058 444 A1 beschreibt Verfahren und Vorrichtungen zur Herstellung von Werk- oder Brennstoffen. Alle Druckschriften betreffen jedoch die Umwandlung von Biomasse in kohleähnliche Produkte, also Ausgangsmaterialien, die auch die Grundlage für die natürliche Kohleentstehung darstellen. Es besteht somit ein Bedarf an der Weiterentwicklung der hydrothermalen Karbonisierung, um diese Einschränkung zu umgehen. Eine Aufgabe der vorliegenden Erfindung besteht in der Bereitstellung von Partikeln eines kohleähnlichen Feststoffs, dem nicht im Wesentlichen Biomasse zugrunde liegt, weiterhin in der Bereitstellung entsprechender Herstellungsverfahren, sowie der Bereitstellung von Verwendungen solcher Partikel und von Produkten, enthaltend solche Partikel.

Die Aufgabe wird erfindungsgemäß gelöst durch ein Verfahren mit den Merkmalen des Hauptanspruchs und durch Verfahrensprodukte, nämlich Partikel eines kohleähnlichen Feststoffs beziehungsweise Aufschlämmungen davon, und deren Verwendungen oder Folgeprodukte gemäß den Merkmalen der Nebenansprüche.

### Kurze Beschreibung der Erfindung

Die vorliegende Anmeldung beschreibt und betrifft in einem ersten Aspekt ein Verfahren zur Herstellung von Partikeln eines kohleähnlichen Feststoffs, wobei man ein wässriges Reaktionsgemisch, das ein Kunststoffmaterial, enthaltend einen oder mehrere hydrolysierbare Kunststoffe, die ausgewählt sind unter Polyurethanen und/oder Polyestern, und weiterhin biologisches Material umfasst, wobei das Gewichtsverhältnis von Kunststoffmaterial zu biologischem Material 750:1 bis 1,5:1 beträgt, bei einem Druck von 2 bis 60 Bar und einer Temperatur von 195°C bis 225°C in Gegenwart eines Katalysators, der ausgewählt ist unter einer Säure, einer Base und/oder einem Katalysator auf Metallbasis oder Schwefelbasis, über einen Zeitraum von 0,1 bis 48 Stunden umsetzt und die erhaltene Aufschlämmung von Partikeln eines kohleähnlichen Feststoffs gewinnt und die Partikel in der Aufschlämmung, oder die Partikel nach Verringerung des Wassergehalts der Aufschlämmung, wenigstens einem Zerkleinerungsschritt unterwirft, der ausgewählt ist unter: Zusetzen eines organischen Lösungsmittels, das ausgewählt ist unter n-Propanol, Isopropanol, Aceton, 1-Butanol, 2-Butanol, Diethylether, Dimethylether, Benzol, Toluol oder Xylol, oder Gemischen zweier oder mehrerer Vertreter davon.

Gemäß einer Weiterbildung setzt man der Aufschlämmung von Partikeln des kohleähnlichen Feststoffs, oder den Partikeln nach Verringerung des Wassergehalts, ein organisches Lösungsmittel zu und erhält eine Aufschlämmung von Partikeln oder Partikel mit einem erhöhten Anteil an Partikeln geringerer Größe, wobei das organische Lösungsmittel ausgewählt ist unter n-Propanol, Isopropanol, Aceton oder einem Gemisch zweier oder mehrerer Vertreter davon.

Gemäß einer Weiterbildung wird eine Größenfraktionierung der Partikel des kohleähnlichen Feststoffs vorgenommen.

Gemäß einer Weiterbildung wird bei dem Verfahren der Wassergehalt der gewonnenen Aufschlämmung optional verringert, weiterhin die Aufschlämmung oder die nach Verringerung des Wassergehalts erhaltenen Partikel einem Zerkleinerungsschritt unterworfen, weiterhin für den Fall, dass eine Aufschlämmung vorliegt, deren Wassergehalt unter Erhalt der Partikel verringert, weiterhin den Partikeln ein organisches Lösungsmittel zugesetzt, weiterhin mit den Partikeln im organischen Lösungsmittel eine Größenfraktionierung vorgenommen und eine Trennung erhaltener Größenfraktionen voneinander vorgenommen, weiterhin optional den Partikel der erhaltenen Größenfraktionen erneut ein organisches Lösungsmittel zugesetzt, und die erhaltenen Partikel werden gewonnen.

Gemäß einer Weiterbildung umfasst das Kunststoffmaterial Polyester, Polyurethan, Polyurethan-Weichschaum, Polyurethan-Hartschaum, mittelharten Polyurethan-Schaum Integral-Hartschaum, Schredderleichtfraktion oder eine Mischung zweier oder mehrerer Vertreter davon.

Gemäß einer Weiterbildung umfasst das Kunststoffmaterial entweder Polyurethan-Weichschaum oder besteht daraus, und die Umsetzung erfolgt in einem Temperaturbereich von 218 °C bis 222°C; oder das Kunststoffmaterial umfasst Polyurethan-Hartschaum oder besteht daraus, und die Umsetzung erfolgt in einem Temperaturbereich von 198 °C bis 202°C; oder das Kunststoffmaterial umfasst mittelharten Polyurethanschaum oder besteht daraus, und die Umsetzung erfolgt in einem Temperaturbereich von 198 °C bis 202°C, gefolgt von einer mechanischen Zerkleinerung, einer optionalen Verringerung des Wassergehalts, und einem Zusetzen eines organischen Lösungsmittels, optional gefolgt von einer Zentrifugation zur Größenfraktionierung mit anschließender Trennung des Sediments und des Überstands und einem Zusetzen eines organischen Lösungsmittels jeweils zum Sediment und zum Überstand.

Gemäß einer Weiterbildung ist das biologische Material ausgewählt unter Zellulose, Stärke, zellulose- oder stärkehaltigen Materialien, Klärschlamm, Klärschlammkohle, zellulose- oder stärkehaltigen Biomassen, Jatropha, Pflanzenresten, insbesondere Laub, Speiseresten, oder Mischungen zweier oder mehrerer Vertreter davon.

Gemäß einer Weiterbildung erfolgt die Umsetzung in einem sauren pH-Bereich, insbesondere bei maximal pH 4,5, oder in einem basischen Bereich, insbesondere bei mindestens pH 8,5.

Gemäß einer Weiterbildung wird ein Katalysator auf Metallbasis verwendet, der ausgewählt ist unter Eisensalzen und/oder Eisen-Nanopartikeln.

Gemäß einer Weiterbildung wird Polyurethan-Weichschaum in einem Temperaturbereich von 198 °C bis 202 °C umgesetzt.

Gemäß einer Weiterbildung wird Polyurethan-Weichschaum in einem Temperaturbereich von 218 °C bis 222 °C umgesetzt.

Ein weiterer Gegenstand der Erfindung betrifft eine Aufschlämmung von Partikeln eines kohleähnlichen Feststoffs oder Partikel eines kohleähnlichen Feststoffs, jeweils erhalten über ein erfindungsgemäßes Verfahren ohne beziehungsweise mit Verringerung des Wassergehalts, gemäß Anspruch 12.

Ein weiterer Aspekt betrifft die Verwendung einer Aufschlämmung von Partikeln, oder von Partikeln eines kohleähnlichen Feststoffs, als Ruß-Ersatz, wobei die Aufschlämmungen und/oder die Partikel jeweils hergestellt sind durch ein erfindungsgemäßes Verfahren, oder hergestellt sind durch Umsetzung von Kunststoffmaterial, wobei man ein wässriges Reaktionsgemisch, umfassend 1 bis 75 Gewichtsprozent Kunststoffmaterial bei einem Druck von 2 bis 60 Bar und einer Temperatur von 180 bis 250°C in Gegenwart eines Katalysators, der ausgewählt ist unter einer Säure, einer Base und/oder einem Katalysator auf Metallbasis oder Schwefelbasis, über einen Zeitraum von 0,1 bis 48 Stunden umsetzt und die erhaltene Aufschlämmung von Partikeln eines kohleähnlichen Feststoffs gewinnt.

Ein weiterer Aspekt betrifft dementsprechend einen Ruß-Ersatz, umfassend oder optional bestehend aus einer Aufschlämmung von Partikeln eines kohleähnlichen Feststoffs, oder aus den Partikeln eines kohleähnlichen Feststoffs selbst.

Gemäß einer Weiterbildung umfasst der Ruß-Ersatz 1 bis 99 Gewichtsprozent an Partikeln des kohleähnlichen Feststoffes und 99 bis 1 Gewichtsprozent Industrie-Ruß, und optional einen Differenzbetrag zu 100 Gewichtsprozent, bereitgestellt von einem oder mehreren Zusatzstoffen, oder besteht optional daraus.

Ein weiterer Aspekt betrifft die Verwendung einer erfindungsgemäßen Aufschlämmung von Partikeln oder von erfindungsgemäßen Partikeln oder eines erfindungsgemäßen Ruß-Ersatzes als Füllstoff, als Verstärkerfüllstoff, als UV-Stabilisator, als Leitfähigkeitsvermittler, als Pigment, als Bestandteil von Farbzusammensetzungen, kosmetischen Zusammensetzungen, Baustoffen, Kunststoffen oder Kautschuken, oder zur Herstellung der vorgenannten Produkte, und betrifft weiterhin entsprechende Produkte.

Weitere Aspekte betreffen dementsprechend Farbzusammensetzungen, Füllstoffe, Verstärkerfüllstoffe, UV-Stabilisatoren, Leitfähigkeitsvermittler, Pigmente, kosmetische Zusammensetzungen, Baustoffe, Kunststoffe oder Kautschuke, umfassend einen erfindungsgemäßen Ruß-Ersatz, sowie Produkte, umfassend solche Kautschuke, insbesondere Fahrzeugreifen, Kautschukmatten, Nässeschutzkleidung, gummierte Planen, Dichtungen und Gummilager.

### Ausführliche Beschreibung der Erfindung

Die vorliegende Anmeldung beschreibt und betrifft in einem ersten Aspekt ein Verfahren zur Herstellung von Partikeln eines kohleähnlichen Feststoffs, wobei man ein wässriges Reaktionsgemisch, das ein Kunststoffmaterial, enthaltend einen oder mehrere hydrolysierbare Kunststoffe, ausgewählt unter Polyurethanen und/oder Polyestern, und weiterhin biologisches Material umfasst, wobei das Gewichtsverhältnis von Kunststoffmaterial zu biologischem Material 750:1 bis 1,5:1 beträgt, bei einem Druck von 2 bis 60 Bar und einer Temperatur von 195°C bis 225°C in Gegenwart eines Katalysators, der ausgewählt ist unter einer Säure, einer Base und/oder einem Katalysator auf Metallbasis oder Schwefelbasis, über einen Zeitraum von 0,1 bis 48 Stunden umsetzt und die erhaltene Aufschlämmung von Partikeln eines kohleähnlichen Feststoffs gewinnt und optional den Wassergehalt der Aufschlämmung durch Abtrennung von Reaktionsabwasser unter Erhalt der Partikel des kohleähnlichen Feststoffs verringert. Das Verfahren umfasst einen oder mehrere Schritte, die ausgewählt sind unter einer Verringerung des Wassergehalts der Aufschlämmung unter Erhalt der Partikel des kohleähnlichen Feststoffs, und/oder einem Zusetzen eines organischen Lösungsmittels zum Erhalten einer erhöhten Anzahl von Partikeln mit geringerer Größe, und/oder wenigstens einem Zerkleinerungsschritt. In jedem Fall werden die Partikel in der Aufschlämmung, oder die Partikel nach Verringerung des Wassergehalts der Aufschlämmung, wenigstens einem Zerkleinerungsschritt unterworfen, der ausgewählt ist unter: Zusetzen eines organischen Lösungsmittels, das ausgewählt ist unter n-Propanol, Isopropanol, Aceton, 1-Butanol, 2-Butanol, Diethylether, Dimethylether, Benzol, Toluol oder Xylol, oder Gemischen zweier oder mehrerer Vertreter davon.

Durch die Umsetzung wird das wässrige Reaktionsgemisch, das im Wesentlichen eine mehr oder weniger konzentrierte wässrige Suspension oder gegebenenfalls Dispersion von Kunststoffmaterial darstellt, teilweise oder ganz in eine Aufschlämmung von Partikeln eines kohleähnlichen Feststoffs, also einen Kohleschlamm überführt. Der kohleähnliche Feststoff ähnelt hinsichtlich seines äußeren Erscheinungsbilds und seiner Eigenschaften natürlicher Kohle und weist im Vergleich zum Ausgangskunststoffmaterial einen höheren Kohlenstoffgehalt auf. Je nach Umsetzungsgrad kann dabei ein fließender Übergang zwischen dem Kunststoffmaterial, das als Ausgangsmaterial für das Verfahren verwendet wird, über teerartige, gegebenenfalls klebrige Zwischenstufen, die sich aus gröberen Partikeln zusammensetzen, bis hin zu dem eigentlichen kohleähnlichen Feststoff in makroskopischer Form, also in Form eher großer Konglomerate oder Brocken vorliegen. Enthielt das Kunststoffmaterial vor der Umsetzung polyhalogenierten Kunststoff, so wird dieser in der Regel je nach Halogenierungsgrad mehr oder weniger umgesetzt. Falls erwünscht kann nicht vollständig umgesetzter polyhalogenierter Kunststoff von den Partikeln des kohleähnlichen Feststoffs im Kohleschlamm getrennt werden, beispielsweise durch Filtration, Sedimentation, Flotation oder andere fachbekannte Verfahren. Falls erwünscht können gleichermaßen Nicht-Kunststoffe, wie Metall- oder Keramikbestandteile des ursprünglich für die Umsetzung eingesetzten Kunststoffmaterials von den Partikeln des kohleähnlichen Feststoffs im Kohleschlamm getrennt werden.

Die Aufschlämmung von Partikeln des kohleähnlichen Feststoffs kann nach Ablauf der vorgesehenen Zeitdauer oder nach Erreichen eines gewünschten Umsetzungsgrads teilweise oder vollständig gewonnen werden, beispielsweise aus dem Reaktionsgefäß entnommen werden. Bevorzugt ist eine vollständige oder im Wesentlichen vollständige Umsetzung in den kohleähnlichen Feststoff oder Partikel des kohleähnlichen Feststoffs. Der jeweils erreichte Umsetzungsgrad ist beispielsweise über die Entnahme von Stichproben ermittelbar.

Gemäß einer Weiterbildung des Verfahrens wird der Wassergehalt des erhaltenen Kohleschlamms verringert, indem Reaktionsabwasser, also die aus dem wässrigen Reaktionsgemisch im Laufe der Reaktion entstehende wässrige Phase, abgetrennt wird. Je nach Menge des anfangs eingesetzten Kunststoffmaterials stellt die Aufschlämmung eine dünne oder konzentrierte Suspension oder Dispersion dar. Beispielsweise kann bei dünnen Suspensionen oder Dispersionen der Feststoffgehalt unter 5 Gew.-% liegen, beispielsweise 0,1 Gew.-% bis 4 Gew.-%, während der Feststoffgehalt bei konzentrierteren Suspensionen oder Dispersionen beispielsweise im Bereich von 5% bis 90% liegen kann, insbesondere im Bereich von 10% bis 75%, wie etwa 25% bis 50%, beispielsweise etwa 30%. Die Abtrennung des Reaktionsabwassers erfolgt durch fachübliche Verfahren, wie beispielsweise mechanische Entfeuchtung und/oder thermische Trocknung. Durch mechanische Entfeuchtung ist in der Regel eine Restfeuchte von etwa 20% erzielbar. Beispiele für eine mechanische Entfeuchtung sind Sedimentation und Abtrennung der im Wesentlichen sedimentfreien flüssigen Phase von der sedimentierten festen Phase; Filtration, beispielsweise in Form von Schwerkraftfiltration, wobei die mit Partikeln des kohleähnlichen Feststoffs beladene flüssige Phase aufgrund ihrer Gewichtskraft durch einen Filter gedrückt wird und im Allgemeinen Restfeuchten von 15 bis 25% ermöglicht werden; Druck- oder Vakuumfiltration, wobei das Druckgefälle über den Filter hinweg durch einen vor dem Filter angelegten Druck beziehungsweise ein hinter dem Filter angelegtes Vakuum erhöht und somit eine schnellere Filtration bewirkt wird; Zentrifugation und insbesondere Filterzentrifugation, wobei üblicherweise Restfeuchten von weniger als 10% erreichbar sind; und Pressfiltration, die vorwiegend bei der Entwässerung von fein- und feinstkörnigen Aufschlämmungen zum Einsatz kommt, wobei das treibende Potential die stetige Verkleinerung des Verfahrensraumes ist, beispielsweise eines die Aufschlämmung enthaltenden Zylinders, in den ein Kolben eingeführt wird. Beispiele für thermische Trocknung sind die Kontakttrocknung, bei der sich die Aufschlämmung auf einer beheizten Oberfläche befindet, von der Wärmeenergie abgegeben wird; die Konvektionstrocknung, bei der Wärmeenergie durch ein heißes Gas auf die Aufschlämmung übertragen wird; und die Strahlungstrocknung, bei der die Energie durch Strahlung in die Aufschlämmung eingebracht wird.

Im Allgemeinen erfordert die mechanische Entfeuchtung einen geringeren Energieaufwand als die thermische Trocknung. In einer bevorzugten Ausführungsform erfolgt dementsprechend die Abtrennung von Reaktionsabwasser über mechanische Entfeuchtung. Optional kann, falls ein höherer Entfeuchtungsgrad als mit mechanischer Entfeuchtung erzielbar gewünscht ist, in einem nachgeschalteten Schritt eine zusätzliche thermische Trocknung erfolgen. Der zu erreichende Wassergehalt kann je nach Bedarf beziehungsweise dem beabsichtigten Verwendungszweck des erhaltenen kohleähnlichen Feststoffs gewählt werden, und beispielsweise von etwa 45 bis 60%, d.h. dem Gehalt von Braunkohle, bis etwa 2 bis 5%, d.h. dem Gehalt von Steinkohle reichen. Neben der Verringerung des Wassergehalts kann auch die Konsistenz der Aufschlämmung beziehungsweise des kohleähnlichen Feststoff verändert werden. Beispielsweise kann eine feine Partikelstruktur beibehalten oder gegebenenfalls durch Zerkleinern größerer Partikel erzeugt werden, oder kleine Partikel können, beispielsweise durch Verpressen, zu größeren Partikeln oder Blöcken zusammengefügt werden, so dass vermehrt ein makroskopischer kohleähnlicher Feststoff erhalten wird. Bevorzugt ist im Rahmen der Erfindung die Bereitstellung kleiner Partikel.

Die Verringerung des Wassergehalts der Aufschlämmung von Partikeln des kohleähnlichen Feststoffs reicht, beispielsweise in Abhängigkeit von einer geplanten weiteren Verwendung, von einer Konzentrierung der Aufschlämmung bis hin zu einer Entfernung des Reaktionsabwassers unter Erhalt einer Trockensubstanz aus Partikeln des kohleähnlichen Feststoffs.

Ebenfalls im Rahmen des Verfahrens werden die Partikel einem oder mehreren Zerkleinerungsschritten unterworfen. Die Zerkleinerung kann im Rahmen der Umsetzung erfolgen, beispielsweise direkt in einem Reaktionsgefäß, in dem das Verfahren abläuft, oder nach Entnahme der Aufschlämmung der Partikel des kohleähnlichen Feststoffs, wobei die Zerkleinerung dann in der Aufschlämmung selbst, oder nach Abtrennung der Partikel vom Reaktionsmedium und gegebenenfalls Aufnahme in ein neues Medium oder in getrocknetem Zustand erfolgen kann. Dementsprechend können der oder die Zerkleinerungsschritte vor oder nach der optionalen Verringerung des Wassergehalts erfolgen.

Gemäß einer Weiterbildung werden die Aufschlämmung von Partikeln des kohleähnlichen Feststoffs oder die Partikel des kohleähnlichen Feststoffs einem oder mehreren Nachbearbeitungsschritten unterworfen. Beispielsweise kann der pH-Wert gegenüber dem im Reaktionsgemisch vorherrschendem pH-Wert verändert werden, oder die Aufschlämmung von Partikeln des kohleähnlichen Feststoffs oder die Partikel des kohleähnlichen Feststoffs können einem oder mehreren Waschschritten unterworfen werden, beispielsweise mit Wasser, entionisiertem oder destilliertem Wasser, einem oder mehreren organischen Lösungsmitteln, etwa polaren oder apolaren Lösungsmitteln, oder einem Gemisch eines oder mehrerer der vorgenannten Vertreter, wobei die Waschschritte etwa zur Entfernung von im Rahmen der Umsetzung entstehenden Nebenprodukten dienen. Im Rahmen der Nachbearbeitungsschritte können fachbekannte Vorgehensweisen wie Sedimentation, Zentrifugation oder Filtration zum Einsatz kommen.

Gemäß der Erfindung setzt man der Aufschlämmung von Partikeln des kohleähnlichen Feststoffs oder den Partikel nach Verringerung des Wassergehalts ein organisches Lösungsmittel zu, das ausgewählt ist unter n-Propanol, Isopropanol, Aceton, 1-Butanol, 2-Butanol, Diethylether, Dimethylether, Benzol, Toluol oder Xylol, oder Gemischen zweier oder mehrerer Vertreter davon. Überraschenderweise wurde im Rahmen der Erfindung gefunden, dass durch eine derartige Behandlung ein erhöhter Anteil kleinerer Partikel erhalten werden kann, so dass durch Zusetzen des organischen Lösungsmittels zu der Aufschlämmung die Anzahl der darin enthaltenen kleinen Partikel erhöhbar ist, beziehungsweise durch Zusetzen des organischen Lösungsmittels zu Partikeln die Anzahl der darin befindlichen kleinen Partikel erhöhbar ist, jeweils verglichen mit der Anzahl der kleinen Partikel vor Zusetzen des organischen Lösungsmittels. Das Zusetzen des organischen Lösungsmittels stellt also einen Zerkleinerungsschritt dar. Ohne auf eine Theorie festgelegt sein zu wollen wird angenommen, dass das organische Lösungsmittel zusammenhängende, also über Materialbrücken verbundene, oder zusammengelagerte, also nicht über Materialbrücken zusammenhängende, jedoch stark aneinander haftende Ansammlungen kleiner Partikel, etwa aufgrund elektrostatischer Kräfte, mit einer resultierenden großen Gesamtgröße in entsprechend kleinere Partikel mit entsprechenden resultierenden geringeren Gesamtgrößen trennt, etwa durch Verringerung der Haftung und im Falle von Materialbrücken durch deren Aufbrechen durch besser wirksame Scherkräfte. Das organische Lösungsmittel kann ein apolares Lösungsmittel sein, ausgewählt unter Benzol, Toluol, oder Xylol, ist vorzugsweise jedoch ein polares organisches Lösungsmittel, und ist ausgewählt unter n-Propanol, Isopropanol, 1-Butanol, 2-Butanol, Diethylether, Dimethylether und Aceton oder Gemischen zweier oder mehrerer Vertreter davon. Besonders bevorzugt handelt es sich um Isopropanol, Acteton oder ein Gemisch aus Isopropanol und Aceton. Das Zusetzen kann einmalig oder mehrmals erfolgen, gegebenenfalls nach Entfernung eines vorangegangen Lösungsmittels, kann also beispielsweise eine Abfolge von der vorstehend genannten Lösungsmitteln, in beliebiger Reihenfolge sein, etwa eine Abfolge von Aceton und Isopropanol.

Im Rahmen des Verfahrens kann eine Größenfraktionierung der Partikel des kohleähnlichen Feststoffs vorgenommen werden, um beispielsweise bestimmte Größenbereiche auszusondern oder anzureichern. Die Fraktionierung kann während des Verfahrens oder nach dessen Abschluss in einer wässrigen Phase, beispielsweise in Gegenwart des Reaktionsgemisches oder Reaktionsabwassers, oder nach teilweisem oder vollständigen Austausch des Reaktionsgemisches oder Reaktionsabwassers in einer anderen wässrigen oder nicht-wässrigen Phase erfolgen, etwa durch Filtration, Sedimentation, Flotation, Zentrifugation oder Dichtegradientenzentrifugation, Größenausschluss-Chromatographie und dergleichen, oder nach Entfernung der wässrigen oder nicht-wässrigen Phase, etwa durch Sieben oder Windsichten getrockneter Partikel des kohleähnlichen Feststoffs. Vorteilhaft lassen sich durch die Größenfraktionierung Partikel eines gewünschten Größenbereichs selektieren, etwa mit Hinblick auf eine geplante Verwendung der Partikel in Produkten, die Partikel entsprechender Größenbereiche erfordern. Fraktionen mit zu großen Partikeln können Zerkleinerungsverfahren unterworfen werden, etwa mechanischer Zerkleinerung durch Mahlen oder Ultraschallbehandlung, oder erneut in das Reaktionsgemisch eines Verfahrens zur Herstellung von Partikeln eines kohleähnlichen Feststoffs eingebracht werden, um eine weitere Verringerung der Partikelgröße zu erzielen. Gemäß einer besonderen Weiterbildung erfolgt eine Größenfraktionierung durch Zentrifugation oder Filtration, wobei das Sediment der Zentrifugation beziehungsweise der Filterrückstand üblicherweise Größenfraktionen mit vergleichsweise großen Partikeln darstellen und der Überstand der Zentrifugation beziehungsweise das Filtrat üblicherweise Größenfraktionen mit vergleichsweise kleinen Partikeln darstellen.

Alle vorstehenden Maßnahmen sind beliebig miteinander kombinierbar. Gemäß einem Beispiel erfolgt eine Größenfraktionierung direkt nach Erhalt der Aufschlämmung oder der darin erhaltenen Partikel zur Gewinnung von gewünschten Größenfraktionen. Gemäß einem weiteren Beispiel werden die Aufschlämmungen oder die Partikel der Aufschlämmungen nach Verringerung des Wassergehalts in einem Schritt oder nacheinander, gegebenenfalls wiederholt, mit einem oder mehreren der vorstehend genannten organischen Lösungsmitteln, vorzugsweise Isopropanol, Acteton oder einem Gemisch aus Isopropanol und Aceton versetzt, um die Anzahl kleinerer Partikel zu erhöhen, woraufhin eine Größenfraktionierung durchgeführt wird, um kleinere von größeren Partikeln zu trennen. Gemäß einem anderen Beispiel erfolgt eine Größenfraktionierung der Aufschlämmung oder der daraus gewonnenen Partikel, und einzelne oder alle der erhaltenen Größenfraktionen werden in einem Schritt oder nacheinander, gegebenenfalls wiederholt, mit einem oder mehreren der vorstehend genannten organischen Lösungsmitteln, vorzugsweise Isopropanol, Acteton oder einem Gemisch aus Isopropanol und Aceton versetzt, um eine Größenreduzierung zu bewirken.

Gemäß einer besonderen Ausführungsform wird in einem optionalen Schritt a) der Wassergehalt der gewonnenen Aufschlämmung verringert; in einem Schritt b) die Aufschlämmung oder die nach Verringerung des Wassergehalts erhaltenen Partikel einem Zerkleinerungsschritt unterworfen; in einem Schritt c) für den Fall, dass eine Aufschlämmung vorliegt, deren Wassergehalt verringert; in einem Schritt d) den Partikeln ein organisches Lösungsmittel zugesetzt; und in einem Schritt e) mit den Partikeln im organischen Lösungsmittel ein Größenfraktionierung vorgenommen, wonach erhaltene Größenfraktionen voneinander getrennt werden; optional in einem Schritt f) den Partikeln der erhaltenen Größenfraktionen erneut ein organisches Lösungsmittel zugesetzt; und in einem Schritt g) die erhaltenen Partikel gewonnen. Die Lösungsmittel der Schritte d) und f) können gleich oder verschieden sein. Beispielsweise wird eine erhaltene Aufschlämmung in einem Schritt b) einem Zerkleinerungsschritt mit einer Kugelmühle unterworfen, die Aufschlämmung in einem Schritt d) getrocknet, den getrockneten Partikeln in einem Schritt d) Aceton als organisches Lösungsmittel zugesetzt, und eine Größenfraktionierung mittels Zentrifugation als Schritt e) durchgeführt. Die erhaltenen Größenfraktionen in Form des Sediments und des Überstands werden dann getrennt voneinander im Schritt f) jeweils mit Isopropanol als organischem Lösungsmittel versetzt, wodurch nochmals eine Größenreduzierung bewirkbar ist. Die Gewinnung gemäß Schritt g) kann mit fachbekannten Vorgehensweisen erfolgen, beispielsweise wiederum durch Zentrifugation oder durch Abziehen des Lösungsmittels, etwa im Vakuum.

Im Rahmen der Erfindung wird unter Kunststoffmaterial ein Kunststoff umfassendes Material verstanden, das von einem reinen Kunststoff bis hin zu kunststoffhaltigen Gemischen reicht. Der Begriff "Kunststoff" wird im üblichen Sinn verwendet und bezeichnet einen synthetisch hergestellten Stoff, beispielsweise einen im Rahmen einer organischen Synthese hergestellten Stoff, etwa ein durch Polymerisation, Polyaddition und/oder Polykondensation aus einem oder mehreren unterschiedlichen Monomeren hergestelltes Polymer. Kunststoffe werden gemäß einer üblichen Einteilung in Duroplaste, Thermoplaste, Elastomere und thermoplastische Elastomere eingeteilt. Bekannte Beispiele für Kunststoffe sind Polyethylen, Polycarbonat, Polyacryl, Polymethacryl, Polyacrylamid, Polystyrol, Acrylnitril-Butadien-Kautschuk, Styrol-Butadien-Kautschuk, Chloropren-Kautschuk, Butadien-Kautschuk und Ethylen-Propylen-Dien-Kautschuk, sowie Polyurethan, wobei in besonderen Ausführungsformen vorgesehen ist, dass das Kunststoffmaterial als Kunststoffe nur hydrolysierbare Kunststoffe umfasst, beispielsweise Polyester, Polyamide und/oder Polyurethane. Vorher für eine technische Aufgabe verwendeter, beispielsweise im Rahmen einer Matratzenherstellung angefallener oder chemisch bearbeiteter, etwa vulkanisierter Naturkautschuk, gilt im Rahmen der Erfindung ebenfalls als Kunststoff, Lignin, also Holz, jedoch nicht. Die Kunststoffe können, gegebenenfalls in Abhängigkeit von deren ursprünglichem Verwendungszweck, weitere Substanzen wie beispielsweise Weichmacher, mikrobizide Substanzen, Antioxidantien, Stabilisatoren, beispielsweise gegenüber UV-Licht, Flammschutzmittel, Farbstoffe oder Reste von Polymerisationsinitiatoren enthalten. Kunststoffe umfassen auch solche, die nicht auf Ausgangsprodukten auf Erdölbasis beruhen, sondern die im Rahmen eines Konzepts der Nachhaltigkeit und der Erneuerbarkeit aus nachwachsenden Rohstoffen entstehen, entweder im Rahmen einer chemischen Synthese oder im Rahmen biotechnologischer oder mikrobiologischer Verfahren durch entsprechend gestaltete Enzyme oder Produktionsorganismen. Die eingangs genannten kunststoffhaltigen Gemische sind entweder Gemische aus reinen Kunststoffen, oder Gemische, die auch ein oder mehrere Nicht-Kunststoffe wie etwa Metall, Keramik oder biologisches Material, umfassen. Vorzugsweise stellen der oder die Kunststoffe in solchen Gemischen, die auch Nicht-Kunststoffe umfassen, den relativ größten Anteil, bezogen auf das Gewicht oder Volumen dar, beispielsweise wenigstens 75 %, wenigstens 80 %, wenigstens 90 %, wenigstens 95 %, wenigstens 98 % oder wenigstens 99%.

Nicht-limitierende Beispiele für Gemische aus reinen Kunststoffen sind solche, die bei der Demontage oder dem Recycling von Gebrauchsartikeln anfallen, beispielsweise dem Recycling von Autos, Spielzeug, oder Elektrogeräten wie Kühlschränken, Kaffeemaschinen, Computern, Computerdruckern, Tintenkassetten oder Tonerkassetten von Druckern, im Rahmen von Gebäudeerrichtungen oder Gebäudesanierungen, wie etwa Kabelummantelungen, überzählige oder beschädigte Kunststoffzierleisten oder Kunststoffteile, wie etwa Steckdosen, Dämmmaterialien wie etwa Styroporplatten oder Polyurethanplatten, oder im Rahmen offizieller Wiederverwertungs- oder Recyclingsysteme, wie beispielsweise dem System "Gelber Sack" oder "Gelbe Tonne" in Deutschland, wobei gegebenenfalls zuvor eine Trennung von anderen Materialien wie beispielsweise Metallen vorgenommen wurde. Weitere Beispiele sind Kunststoffe, die im Rahmen des Einzelhandels anfallen, wie Plastiktüten aus Polyethylen oder Polypropylen, Flaschen aus Polyethylen oder Polyethylenterephthalat (sogenannten PET-Flaschen), beispielsweise aus der Getränkeindustrie. Nicht-limitierende Beispiele für Gemische, die auch Nicht-Kunststoffe enthalten, sind Kunststoffverpackungen wie etwa postalische Umschläge, die beispielsweise Papierreste von Beschriftungsfeldern oder Metallteile von Verschlusselementen enthalten; Einweg-Kunststoffgeschirr oder Kunststoffbesteck, dem Speisereste anhaften; Sanitär- oder Hygieneartikel wie benutzte Zahnbürsten oder Wattestäbchen; oder Einwegkunststoffartikel aus der Medizin oder der medizinischen oder biologischen Forschung, wie Katheter, Aufbewahrungsbeutel für medizinische Lösungen oder Körperflüssigkeiten, Kunststoff und Papier umfassende sterile Verpackungen, Zellkulturflaschen oder Petrischalen, gegebenenfalls mit Resten von flüssigen oder festen Nährmedien, bei denen gegebenenfalls zuvor biologisches Gefahrenmaterial unschädlich gemacht wurde, beispielsweise durch Autoklavieren oder Sterilisieren, etwa mittels chemischer Agenzien oder mittels Bestrahlung.

Gemäß einer Weiterbildung wird das Kunststoffmaterial in reiner oder im Wesentlichen reiner Form, beispielsweise mit weniger als 25 Gewichtsprozent, insbesondere weniger als 10 Gewichtsprozent oder weniger als 5 Gewichtsprozent oder 0 Prozent Nicht-Kunststoffmaterial, also Nicht-Kunststoffe umfassend eingesetzt, um vorteilhaft ein kontrolliertes Ausgangsmaterial für das Verfahren zu verwenden. Gemäß einer weiteren Ausgestaltung wird das Kunststoffmaterial nicht in einer Form verwendet, die ausgewählt ist unter Hausmüll, kommunalem Müll oder Industriemüll. Diese Arten von Müll könnten jeweils zusätzliches Nicht-Kunststoffmaterial wie beispielsweise Glas oder Metall umfassen, das sich im erhaltenen Kohleschlamm, gegebenenfalls in umgewandelter Form, wiederfinden würde. Zur Verringerung des Gehalts an Nicht-Kunststoffmaterial kann optional hinsichtlich des Kunststoffmaterials angereicherter Hausmüll, kommunaler Müll oder Industriemüll für das Verfahren verwendet werden. Entsprechende Verfahren zur Anreicherung sind dem Fachmann bekannt und umfassen beispielsweise manuelles Aussortieren von Kunststoff beziehungsweise manuelles Entfernen von Nicht-Kunststoff, magnetisches Entfernen magnetischer Metalle oder Metalllegierungen, oder das Trennen von Kunststoffen und gegebenenfalls anderen Materialien ähnlicher Dichte aufgrund von Dichteunterschieden von Materialien unterschiedlicher Dichten, etwa über Windsichten oder Rüttel- oder Vibrationsvorrichtungen. Bei dem erfindungsgemäßen Verfahren kann weiterhin vorgesehen sein, dass das Kunststoffmaterial keinen polyhalogenierten Kunststoff enthält oder im Wesentlichen keinen polyhalogenierten Kunststoff enthält, beispielsweise weniger als 10, 5 oder 1 Gewichtsprozent an polyhalogeniertem Kunststoff bezogen auf das Gesamtgewicht der Kunststoffe. Es ist anzunehmen, dass in hohem Maße polyhalogenierte Kunststoffe, beispielsweise Polytetraflourethylen, wenig oder nicht umsetzbar sind und gegebenenfalls nach der Umsetzung mehr oder weniger unverändert vorliegen und erforderlichenfalls abgetrennt werden können. Gemäß einer Weiterbildung enthält das Kunststoffmaterial vor der Umsetzung weniger als 10 Gewichtsprozent, weniger als 5 Gewichtsprozent, weniger als 1 Gewichtsprozent oder 0 Gewichtsprozent an inerten polyhalogenierten Kunststoffen, wie etwa Polytetraflourethylen, bezogen auf das Gesamtgewicht der Kunststoffe in dem Kunststoffmaterial.

Das im Rahmen der Herstellung der Partikel des kohleähnlichen Feststoffs verwendete Kunststoffmaterial gemäß dem ersten Aspekt enthält einen oder mehrere hydrolysierbare Kunststoffe, ausgewählt unter Polyurethanen und/oder Polyestern, oder besteht aus Polyurethanen, Polyestern und/oder einem Gemisch daraus. Gemäß einer besonderen Ausführungsform besteht das Kunststoffmaterial aus Polyurethan oder einem Polyurethan-Gemisch, oder aus Polyester oder einem Polyester-Gemisch, beispielsweise aus Polyethylenterephthalat oder einem Polyethylenterephthalat-Gemisch.

Für eine verbesserte Umsetzung wird das Kunststoffmaterial vorzugsweise in zerkleinertem Zustand eingesetzt, insbesondere wenn es in Wasser nicht quellbaren Kunststoff umfasst. Dabei können fachübliche Zerkleinerungsverfahren verwendet werden, beispielsweise kann das Kunststoffmaterial zerschnitten, zerrissen, in Flocken geraspelt, geschreddert, granuliert, zermahlen oder pulverisiert werden, gegebenenfalls nach vorheriger Temperaturabsenkung zur Erhöhung der Sprödigkeit. Nichtlimitierende Beispiele für die Größe der verwendeten Kunststoffpartikel sind etwa 0,5 cm³ bis 10 cm³ (0,5 ml bis 10 ml), wie etwa 1 cm³ bis 5 cm³, insbesondere für poröses oder eine große Oberfläche aufweisendes Kunststoffmaterial, oder Kunststoffpartikel mit einem Durchmesser, gemessen an der größten Stelle, von maximal etwa 10, 5, 2, 1, 0,5, 0,1, 0,05 oder 0,01 Millimeter. Die Zerkleinerung kann während der Durchführung des Verfahrens durch entsprechende Vorrichtungen im Reaktionsgefäß erfolgen, vorzugsweise wird jedoch das Reaktionsgefäß mit Kunststoffmaterial in bereits zerkleinerter Form befüllt. Im Rahmen der Umsetzung wird das Kunststoffmaterial in den kohleähnlichen Feststoff überführt wobei - ohne auf eine Theorie festgelegt sein zu wollen - angenommen wird, dass mit abnehmender Größe des eingesetzten Kunststoffmaterials der kohleähnliche Feststoff vermehrt in Form von Partikeln des kohleähnlichen Feststoffs entsteht.

Das wässrige Reaktionsgemisch stellt somit im Wesentlichen eine Suspension des Kunststoffmaterials in einem wässrigen Medium dar.

Das wässrige Reaktionsgemisch umfasst vorzugsweise 1 bis 75 Gewichtsprozent Kunststoffmaterial, bezogen auf das Gesamtgewicht des Reaktionsgemisches, wie etwa 2 bis 50 Gew.-%, 5 bis 40 Gew.-%, 10 bis 30 Gew.-%, oder 15 bis 25 Gew.-%, beispielsweise also etwa 5, 10 15, 20, 25, 30, 35, 40, 45 , 50, 55, 60, 65, 70 oder 75 Gewichtsprozent.

Das Verfahren wird durchgeführt bei einem Druck im Bereich von 2 bis 60 Bar, wie etwa 5 bis 50 Bar, 10 bis 40 Bar, oder 20 bis 30 Bar, beispielsweise also bei etwa 10, 15, 20, 25, 30, 35, 40, 45, 50, 55 oder 60 Bar. Die Temperatur liegt während der Durchführung des Verfahrens in einem Bereich von 180°C bis 250°C, wie etwa 190°C bis 245°C, 200°C bis 240°C, 210°C bis 235, oder 215°C bis 230°C, wie etwa 185, 190, 200, 210, 215, 220, 225, 230, 235, 240 oder 250°C. Vorzugsweise werden eine Soll-Temperatur und ein Soll-Druck vorgegeben, wobei es für den Fachmann jedoch verständlich ist, dass während der Durchführung eines Verfahrens die Ist-Werte von den Soll-Werten abweichen oder um diese herum schwanken können, und gegebenenfalls entsprechend gesteuert oder nachgeregelt werden können. Die Temperatur und der Druck können aktiv geregelt werden. Gemäß einer besonderen Weiterbildung wird lediglich die Temperatur aktiv geregelt, wobei sich der Druck aufgrund der vorliegenden Temperatur des wässrigen Reaktionsgemisches in einem vorgegebenen Reaktionsvolumen als Gleichgewichtsdruck passiv einstellt. Die Umsetzung erfolgt über einen Zeitraum von 0,1 bis 48 Stunden, beispielsweise also etwa 1 bis 36 Stunden, 2 bis 24 Stunden, 3 bis 12 Stunden, 3 bis 7 Stunden, 4 bis 6 Stunden, oder 4 bis 8 Stunden, wie etwa 2, 3, 4, 5, 6, 7, 8, 9, 10, 12, 15, 18 oder 24 Stunden. Die Umsetzung erfolgt unter Luftabschluss. Sie kann insbesondere unter anaeroben Bedingungen erfolgen. Dem Fachmann sind geeignete Maßnahmen zur Erzeugung anaerober Bedingungen bekannt, beispielsweise durch Austreiben von Sauerstoff aus dem wässrigen Reaktionsgemisch durch Erhitzen, durch Dampferzeugung und/oder durch Spülen mit einem inerten Gas wie beispielsweise Stickstoff.

Die Umsetzung findet statt in Gegenwart wenigstens eines Katalysators, der ausgewählt ist unter einer Säure, einer Base und/oder einem Katalysator auf Metallbasis oder Schwefelbasis.

Als Säuren sind alle anorganischen oder organischen Säuren verwendbar, die bei den Reaktionsbedingungen wasserlöslich und stabil sind. Nicht-limitierende Beispiele für anorganische Säuren umfassen Salzsäure, Schwefelsäure, Salpetersäure und Phosphorsäure. Nicht-limitierende Beispiele für organische Säuren umfassen lineare oder verzweigte, gesättigte oder ungesättigte Carbonsäuren, insbesondere lineare, gesättigte Monocarbonsäuren wie Ameisensäure, Essigsäure, Propionsäure, Buttersäure oder Pentansäure, Hexansäure, Heptansäure; Dicarbonsäuren wie Oxalsäure (Ethandisäure), Malonsäure (Propandisäure), Bernsteinsäure (Butandisäure), Glutarsäure (Pentandisäure), Adipinsäure (Hexandisäure), Äpfelsäure (2-Hydroxybutandisäure), Weinsäure (2,3-Dihydroxybutandisäure); und Tricarbonsäuren wie Propan-1,2,3-tricarbonsäure, Zitronensäure (2-Hydroxypropan-1,2,3-tricarbonsäure) und Isozitronensäure (1-Hydroxypropan-1,2,3-tricarbonsäure). Vorzugsweise ist die Säure ausgewählt unter Schwefelsäure, Salzsäure, Essigsäure, Adipinsäure und Zitronensäure, oder Gemischen eines oder mehrerer Vertreter davon.

Als Base sind alle anorganischen oder organischen Basen verwendbar, die bei den Reaktionsbedingungen wasserlöslich und stabil sind. Nicht-limitierende Beispiele für anorganische Basen umfassen Alkalimetallhydroxide wie Lithiumhydroxid, Natriumhydroxid und Kaliumhydroxid, Erdalkalimetallhydroxide wie Magnesiumhydroxid oder Calciumhydroxid. Nicht-limitierende Beispiele für organische Basen umfassen Monoethanolamin (1-Aminoethanol), Diethanolamin (2,2'-Iminobisethanol), Triethanolamin (Tris(2-hydroxyethyl)-amin), Piperidin, und Tetrabutylammoniumhydroxid. Vorzugsweise ist die Base eine anorganische Base, wie beispielsweise Natriumhydroxid, oder ein Gemisch aus anorganischen Basen.

Alternativ zu einer Säure oder Base, oder in Kombination mit einer Säure oder Base kann das Reaktionsgemisch einen oder mehrere Katalysatoren auf Metallbasis oder Schwefelbasis umfassen. Nicht-limitierende Beispiele für Katalysatoren auf Metallbasis sind Eisenkatalysatoren, beispielsweise lösliche Eisenkatalysatoren wie Eisen (II- oder III)-Nitrate oder Eisen (II- oder III)-Sulfate und organische Eisen (II oder III)-Verbindungen wie beispielsweise Acetate, Acetylacetonate, Glukonate, Malonate, Oxalate, Phtalate, Succinate und Zitrate, und daraus bestehende Mischungen; oder Feststoffkatalysatoren aus Eisen oder Eisenlegierungen, weiterhin Nanopartikel aus Eisen oder Eisenlegierungen, optional jeweils in immobilisierter Form, vorzugsweise in fein dispergierter Form. Weitere Beispiele sind Alkalimetalle, insbesondere Lithium, Natrium, Kalium und Rubidium, die beispielsweise in Oxidform zugegeben werden können. Weitere Beispiele sind Erdalkalimetalle, insbesondere Magnesium, Calcium und gegebenenfalls Barium, die beispielsweise ebenfalls in Oxidform zugegeben werden können. Weitere Beispiele für Katalysatoren auf Metallbasis sind Metalloxide, etwa Aluminiumoxid (Al₂O₃), Hafniumoxid (HfO₂), Magnesiumoxid (MnO), Tantaloxid (TiO₂), Zirkonoxid, also Zirconiumdioxid (ZrO₂), oder Metalle, wie beispielsweise Ruthenium, Rhodium oder Palladium, gegebenenfalls immobilisiert auf festen Träger oder in dispergierter Form. Beispiele für Katalysatoren auf Schwefelbasis sind Sulfate, etwa Zinksulfat, Kupfersulfat, Magnesiumsulfat, Nickelsulfat, oder Ester der Schwefelsäure mit der allgemeinen Formel X-O-SO₂-O-X', wobei X und X' unabhängig voneinander für einen organischen Rest, beispielsweise ein Alkyl, das gegebenenfalls substituiert sein kann, oder für Wasserstoff stehen.

Das erfindungsgemäße Verfahren wird gemäß einer Ausführungsform in einem pH-Bereich von 0 bis 7 durchgeführt, vorzugsweise dabei bei einem sauren pH-Wert von weniger als 7. Erfindungsgemäß wurde gefunden, dass die Umsetzung im sauren Bereich bei niedrigen pH-Werten besser verläuft, so dass insbesondere ein pH-Wert von maximal 4,5 bevorzugt ist, beispielsweise ein pH-Bereich von 0 bis 4,5, 0,5 bis 4, oder 1 bis 3,5, etwa ein pH-Wert von etwa 4, 3,5, 3, 2,5, 2, 1,5 oder 1. Die Einstellung eines entsprechenden sauren pH-Werts kann insbesondere durch eine der oben genannten Säuren erfolgen. Alternativ oder zusätzlich kann bei vorheriger Durchführung eines anderen erfindungsgemäßen Verfahrens angefallenes Reaktionsabwasser für die Einstellung des pH-Werts verwendet werden.

Gemäß einer alternativen Ausführungsform wird das Verfahren im basischen pH-Bereich von mehr als 7 bis 14 durchgeführt, insbesondere im Bereich höherer pH-Werte wie im Bereich von pH 8,5 bis 14 oder pH 9,0 bis 13,5, beispielsweise etwa pH 9, pH 10, pH 11, pH 12, pH 13 oder pH 14. Die Einstellung eines entsprechenden basischen pH-Werts kann insbesondere durch eine der oben genannten Basen erfolgen, und/oder analog durch Zugabe von Reaktionsabwasser aus einem vorherigen, bei basischem pH durchgeführten erfindungsgemäßen Verfahren.

Die Prozessführung kann so gestaltet sein, dass vor Beginn der Umsetzung durch das erfindungsgemäße Verfahren ein gewünschter pH-Wert eingestellt wird und das Verfahren dann ohne weitere Regelung des pH-Werts abläuft. Alternativ wird im Rahmen der Prozessführung ein saurer oder basischer pH-Soll-Wert vorgegeben, wobei es für den Fachmann jedoch verständlich ist, dass während der Durchführung eines Verfahrens der jeweilige Ist-Wert von dem Soll-Wert abweichen oder um diesen herum schwanken kann, so dass im Laufe des Verfahrens eine Nachregelung des pH-Werts erfolgen kann. Ebenfalls ist statt eines pH-Wertes ein pH-Bereich vorgebbar, innerhalb dessen eine Regelung erfolgt.

Gemäß einer Ausführungsform wird ein Katalysator auf Metallbasis verwendet, der ausgewählt ist unter Eisensalzen und Eisen-Nanopartikeln. Eisen-Nanopartikel sind dem Fachmann bekannt, etwa in Form von Eisenoxid-Nanopartikeln, wie beispielsweise beschrieben in Samanta et al., Journal of Materials Chemistry, 18: 1204-1208 (2008), oder in Lyon et al., Nanoletters, 4(4): 719- 723 (2004).

Im Stand der Technik beschriebene Verfahren der hydrothermalen Karbonisierung ahmen den natürlichen, geologischen Prozess der Kohlebildung nach. Dabei wird Biomasse als Ausgangsmaterial eingesetzt, also ein Substrat, das im Wesentlichen den natürlichen Substraten der geologischen Kohlebildung entspricht, die durch die hydrothermale Karbonisierung im Grunde imitiert werden soll. Überraschenderweise wurde im Rahmen der Erfindung gefunden, dass auch Kunststoffmaterial sich zu einem kohleähnlichen Feststoff oder Partikeln davon umsetzen lässt, obwohl sich sowohl die chemische Struktur als auch der mikroskopische und makroskopische Aufbau des Kunststoffmaterials von Biomasse unterscheiden.

Im Rahmen der Erfindung wurde gefunden, dass sich die Umsetzung von Kunststoffmaterial in Partikel eines kohleähnlichen Feststoffs verbessern lässt, beispielsweise unter weniger extremen Bedingungen wie etwa neutralerem pH-Wert, geringerer Temperatur oder kürzerer Verfahrensdauer erfolgen kann, wenn das Reaktionsgemisch neben dem Kunststoffmaterial zusätzlich biologisches Material umfasst. Dementsprechend enthält das Reaktionsgemisch biologisches Material, wobei das Gewichtsverhältnis von Kunststoffmaterial zu biologischem Material 750:1 bis 1,5:1 beträgt. Unter biologischem Material wird im Rahmen der Erfindung Pflanzen-, Tier- oder Mikroorganismenmaterial verstanden, beispielsweise komplette Pflanzen oder Pflanzenteile wie etwa Blätter, Stängel, Wurzeln oder Samen, wie etwa Gärtnereiabfälle oder Mähgut; komplette Tierkörper oder Körperteile, etwa Fleisch, Innereien oder Schlachtabfälle jeglicher Art, Körperausscheidungen; oder daraus bestehende Gemische oder Produkte, wie Lebensmittel, Küchenabfälle, Speisereste, wobei unter Speiseresten insbesondere Reste, die bei der Zubereitung von Speisen anfallen und Reste zubereiteter Speisen und bei der Lebensmittelherstellung anfallende Reste verstanden werden, wie etwa Nebenprodukte oder Abfälle, beispielsweise Molke als Nebenprodukt der Käseherstellung; weiterhin Folgeprodukte der vorgenannten Stoffe, wie etwa Tierfette oder Pflanzenöle; Exkremente und deren Folgeprodukte wie etwa Mist, Jauche, Gülle oder Klärschlamm, sowie technische Folgeprodukte wie etwa Frittieröl auf der Basis von Tierfetten oder Pflanzenölen; Klärschlammkohle als Produkt hydrothermaler Karbonisierung oder Reaktionsabwasser von hydrothermaler Karbonisierung, etwa erhalten im Rahmen der hydrothermalen Karbonisierung von Klärschlamm, Zellulose oder sonstiger Biomasse. Ebenfalls zusammengefasst unter dem Begriff biologisches Material sind Zellmassen, die speziell für die Verwendung bei einem erfindungsgemäßen Verfahren erzeugt wurden, beispielsweise Bakteriensuspensionen, Algensuspensionen oder Protozoensuspensionen. Isoliert dem Reaktionsgemisch zugegebene organische Säuren zählen nicht als biologisches Material.

Im Rahmen des Verfahrens können mit Wasser schlecht mischbare oder hydrophobe Substanzen eingesetzt werden, wie etwa Öle oder insbesondere Pflanzenöle, beispielsweise mit einem Volumenanteil von bis zu 50%, insbesondere bis zu 25%. Werden solche Substanzen eingesetzt, so kann das Reaktionsgemisch entsprechende Tenside oder grenzflächenaktive Substanzen umfassen, die der Fachmann leicht ermitteln kann. Beispiele hierfür sind fachbekannte nichtionische, anionische, kationische oder amphotere Tenside.

Das Gewichtsverhältnis von Kunststoffmaterial zu biologischem Material kann dabei in einem weiten Bereich gewählt werden, beispielsweise von 750:1 bis 1,5:1. Vorzugsweise liegt jedoch das Kunststoffmaterial deutlichem Überschuss vor. Im Rahmen der Erfindung wurde überraschend festgestellt, dass bereits geringe Anteile von biologischem Material die Umsetzung begünstigen. Besonders bevorzugt beträgt das Gewichtsverhältnis von Kunststoffmaterial zu biologischem Material dementsprechend 100:1 bis 1,5:1, beispielsweise 50:1 bis 1,6:1, insbesondere 25:1 bis 1,7:1.

Das biologische Material ist vorzugsweise ausgewählt unter Zellulose, Stärke, cellulose- und stärkehaltigen Materialien, Klärschlamm, Klärschlammkohle, Jatropha, Speiseresten, Pflanzenresten, wie etwa Laub, insbesondere Eichenlaub, oder Mischungen zweier oder mehrerer Vertreter davon. Von Pflanzen im Allgemeinen oder Pflanzen der Gattung Jatropha können die gesamte Pflanze oder beliebige Pflanzenteile, wie etwa Wurzeln, Stämme, Blätter, Blattstiele oder Samen, jeweils in unzerkleinerter oder zerkleinerter Form, oder aus den Samen gewonnenes Öl, oder Gemische einzelner oder mehrerer Vertreter davon verwendet werden. Jatropha ist insofern gut geeignet, als dass es sich um eine schnell wachsende Pflanze handelt, die als biologisches Material insbesondere für eine Durchführung des Verfahrens im industriellen Maßstab einfach bereitstellbar ist. Jedoch sich auch andere schnell wachsende Pflanzen besonders geeignet.

Gemäß einer besonderen Weiterbildung sind von dem biologischen Material ausgenommen ein oder mehrere Vertreter, die ausgewählt sind unter Holz, Papier oder Papierprodukten, und landwirtschaftlichem Pflanzenmaterial.

Das Kunststoffmaterial kann neben Polyurethanen und/oder Polyestern beliebige Kunststoffe oder Gemische daraus umfassen. Gemäß einer besonderen Ausgestaltung des erfindungsgemäßen Verfahrens umfasst das Kunststoffmaterial Schredderleichtfraktion, Polyester, Polyurethan (PUR), wobei das Polyurethan vorzugsweise ausgewählt ist unter Polyurethan-Weichschaum (PUR-Weichschaum), Polyurethan-Hartschaum (PUR-Hartschaum), und/oder mittelhartem Polyurethan-Schaum, oder Mischung zweier oder mehrerer Vertreter davon, oder besteht insbesondere aus einem oder mehreren der vorgenannten Vertreter. Gemäß weiteren besonderen Ausgestaltungen besteht das Kunststoffmaterial entweder aus Polyester, beispielsweise aus Polyethylenterephthalat oder Gemischen verschiedener Polyethylenterephthalat-Derivate, oder aus Polyurethan, oder aus Polyurethan-Weichschaum, oder aus mittelhartem Polyurethanschaum, oder aus Polyurethan-Hartschaum, oder aus einem Gemisch von zwei oder drei Vertretern, die ausgewählt sind unter Polyurethan-Weichschaum, mittelhartem Polyurethanschaum und Polyurethan-Hartschaum. Der Begriff der Schredderleichtfraktion ist dem Fachmann der Abfallwirtschaft bekannt und beschreibt im Allgemeinen eine heterogene Mischung, die aus verschiedenen Kunststoffen, organischen und anorganischen Materialien bestehen kann, wobei die konkrete Zusammensetzung von der Art des geschredderten Abfalls abhängt. Ein Beispiel für eine Schredderleichtfraktion fällt beim Recycling von Kühlschränken an, deren Ausschäumung der Hohlräume aus PUR-Hartschaumstoff, gegebenenfalls unter Beimischung anderer Kunststoffe bestehen, etwa Kunstoffen, die auf Durchführungen von Kabeln zurückzuführen sind. Schredderleichtfraktion aus dem Kühlschrankrecycling kann weiterhin mineralische Anteile enthalten, etwa aufgrund von im PUR enthaltenen Füllstoffen.

Unter Polyurethan wird wie fachüblich ein Polymer verstanden, das als charakteristische Gruppe die Urethangruppe gemäß der nachstehenden Formel (I) aufweist: 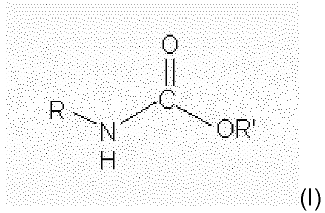 Polyurethane sind im Allgemeinen erhältlich durch die Polyaddition von zwei- oder höherwertigen Alkoholen der Formel (II)

HO-R'-OH (II),

wobei R' für einen niedermolekularen oder selbst bereits polymeren aliphatischen oder aromatischen Rest steht, der gegebenenfalls wenigstens eine weitere Hydroxylgruppe umfasst,
mit Diisocyanaten der allgemeinen Formel (III)

O=C=N-R-N=C=O (III),

wobei R die gleiche Bedeutung hat wie R'.

Die Chemie und die technische Herstellung und Verarbeitung von Polyurethanen ist dem Fachmann allgemein bekannt und beispielsweise beschrieben in Ullmann's Encyclopedia of Industrial Chemistry, 6th Completely Revised Edition, Wiley-VHC Verlag GmbH & Co. KGaA, Weinheim, Deutschland, 2003, Band 28, Seite 667-722. Der größte Teil der Polyurethan-Schaumstoffe (nachfolgend auch als PUR-Schaumstoffe bezeichnet) wird auf der Basis aromatischer Isocyanate hergestellt. Die wichtigsten Vertreter dieser Gruppe sind Gemische aus den Isomeren 2,4-Toluoldiisocyanat und 2,6-Toluoldiisocyanat (TDI), sowie Gemische aus Isomeren von Diphenylmethandiisocyanat (MDI), wofür als nicht-beschränkende Beispiele Diphenylmethan-2,2'-diisocyanat (2,2'-MDI), Diphenylmethan-2,4'-diisocyanat (2,4'-MDI) und Diphenylmethan-4,4'-diisocyanat (4,4'-MDI) genannt werden können, und präpolymerisiertem MDI. TDI 80, ist das bedeutendste Diisocyanat bei der Weichschaumstoffproduktion, wobei sich die Zahl 80 auf den prozentualen Anteil des hochreaktiven Isomers 2,4-Toluoldiisocyanat bezieht. Als Polyolkomponenten kommen vorzugsweise Polyether, Polyester oder Diamine zum Einsatz. Die Eigenschaften lassen sich zudem auch noch durch Zugabe von Stabilisatoren wie Silicon-Polyether-Copolymeren, Epoxiden, Benzophenon und weiteren Substanzen verändern. Auch Additive können die Eigenschaften des Schaumes variieren. So wird beispielsweise Phosphorsäureester als Flammschutzmittel verwendet. Auch mechanische Verstärkungsmittel wie beispielsweise Karbonfasern können in die Schaumstoffe eingebaut werden. Ebenso können Füllstoffe, wie zum Beispiel Calciumcarbonat verwendet werden.

Nicht-beschränkende Beispiele für Quellen von Kunststoffmaterial, das aus Polyurethan besteht oder dieses umfasst, sind Produktionsabfälle der Matratzenindustrie, der Automobilindustrie, der Bauindustrie, der Möbelindustrie, der Schuhindustrie, der Elektroindustrie und der Sport/Freizeitindustrie, beziehungsweise defekte oder nicht mehr benutzte Produkte dieser Industrien, wie etwa Matratzen; Karosserie- oder andere Fahrzeugteile wie etwa Stoßfänger, Armaturentafeln, Kopfstützen, Armlehnen oder Teppiche; Wandpaneele oder Rohrdämmungen; Möbel oder Möbelteile; Schuhe oder Schuhteile, wie etwa Sohlen oder Schuhkappen; Kabelummantelungen, Stecker, Steckerleisten oder Teile davon; oder Sportgeräte wie Snowboards oder Laufrollen von Rollschuhen.

Im Rahmen des erfindungsgemäßen Verfahrens können insbesondere Polyurethan-Schaumstoffe (nachfolgend auch als PUR-Schaumstoffe bezeichnet) verwendet werden, die ausgewählt sind unter folgenden Zusammensetzungen: PUR-Weichschaumstoffen basierend auf nichtreaktiven Polyetherpolyolen (sogenannten Standardpolyetherpolyolen) mit Molekulargewichten um 3000 g/Mol, gefüllt (mit SAN-Copolymeren, d.h. Styrol-Acrylnitril-Copolymeren) oder ungefüllt; PUR-Weichschaumstoffen basierend auf reaktiven High Resilience Polyetherpolyolen mit Molekulargewichten von mehr als 3000 g/Mol, gefüllt (mit SAN-Copolymeren oder PHD, d.h. Polyharnstoff-Dispersion) oder ungefüllt; PUR-Weichschaumstoffen basierend auf reaktiven 6-funktionellen Polyetherpolyolen; PUR-Weichschaumstoffen basierend auf Hypersoft Polyetherpolyolen; PUR-Weichschaumstoffen basierend auf Polyetherpolyolen und Mischungen daraus, die zu viskoelastischen Schaumstoffen führen und als Komponente auch PEG (Polyethylenglycol) enthalten können; PUR-Weichschaumstoffen basierend auf Polyesterpolyolen, gefüllt oder ungefüllt; PUR-Weichschaumstoffen basierend auf vorgenannten Polyolmischungen in Verbindung mit TDI oder MDI; und PUR-Hart- oder Halbhartschaumstoffen basierend auf vorgenannten Polyolmischungen in Verbindung mit TDI oder MDI, sowie Integral-Hartschaumstoffen bestehend aus vorgenannten Komponenten.

Gemäß besonderen Weiterbildungen umfassen die PUR-Schaumstoffe einen oder mehrere Vertreter aus der Produktfamilie der Weichschaumstoffe und/oder einen oder mehrere Vertreter aus der Produktfamilie der Hartschaumstoffe und/oder einen oder mehrere Vertreter aus der Produktfamilie der mittelharten Schaumstoffe.

Weichschaumstoffe umfassen Kunststoffe wie Standardpolyether-Schaumstoffe, High-Resilience Polyether-Schaumstoffe, Combustion modified-Polyether-Schaumstoffe (CME), Combustion modified high resilience-Polyether-Schaumstoffe (CMHR), Viskoelastische Polyether-Schaumstoffe und Polyester-Schaumstoffe. Beispielhafte Zusammensetzungen sind dem Fachmann bekannt und werden zum Beispiel beschrieben in den Druckschriften DE 3630225 C2, US 3,905,924 und DE 10 2007 051 089 A1.

Vorzugsweise umfassen diese Weichschaumstoffe folgende Bestandteile oder bestehen aus Kombinationen zweier oder mehrerer Vertreter daraus:

### Isocyanate:

2,4- und/oder 2,6-Toluylendiisocyanat (TDI) sowie beliebige Gemische dieser Isomere; 4,4'- und/oder 2,2'- Diphenylmethandiisocyanate (MDI) sowie beliebige Gemische dieser Isomere;
Polymer MDI ("Roh"-MDI) sowie mit mehrwertigen Polyolen (vorzugsweise zwei- und/oder dreiwertigen Polyethern) präpolymerisiertes MDI; und/oder
beliebige Gemische von TDI und MDI aus vorgenannten Isomeren und Ausbildungen.

### Polyole:

Polyether-Polyole und/oder Polyester-Polyole, wie sie zur Herstellung von zellförmigen und homogenen Polyurethanschaumstoffen an sich bekannt sind und die zum Beispiel in der DE-A 2 832 253 (Seiten 11-18) beschrieben werden.

### Als Beispiele genannt seien hier:

(Standard) Polyether mit Hydroxylgruppen (Funktionalitäten) von vorzugsweise 2 und 3; mit SAN (Styrol-Acryl-Nitril) Feststoff gefüllte (Standard) Polyether mit Hydroxylgruppen (Funktionalitäten) von vorzugsweise 2 und 3;
Hypersoft-Polyether mit Funktionalitäten von vorzugsweise 3;
reaktive Polyether mit primären Hydroxylgruppen vorzugsweise mit Funktionalitäten von 3, 5 und 6;
mit SAN (Styrol-Acryl -Nitril)-Feststoff bzw. PHD (Polyharnstoffdispersion) gefüllte reaktive Polyether mit primären Hydroxylgruppen vorzugsweise mit einer Funktionalität von 3;
mit TDI präpolymerisierte reaktive Polyole, vorzugsweise mit einer Funktionalität von 3;
mit TDI präpolymerisierte nicht reaktive Polyole auch als so genannte "Quasi-Präpolymere" (QPP) fachbekannt,vorzugsweise mit einer Funktionalität von 3, bei denen die Polyole gegenüber dem TDI im Überschuss vorliegen;
Polyole auf Basis nachwachsender Rohstoffe und unterschiedlicher Funktionalitäten. Naturölprodukte mit unterschiedlicher Anzahl von Hydroxylgruppen, wobei als nichtbeschränkendes Beispiel Rizinusöl zu nennen ist;
Verbindungen mit Aminogruppen oder Hydroxylgruppen, die als Kettenverlängerer oder Vernetzer dienen und in der Regel 2 bis 8, vorzugsweise 2 bis 4, gegenüber Isocyanaten reaktionsfähige Wasserstoffatome aufweisen, beispielsweise Diethanolamin, Triethanolamin, Diisopropanolamin, Sorbitol, Glycerin und Harnstoff.

Diese Weichschaumstoffe umfassen, ebenso wie die nachfolgend genannten Hartschaumstoffe, optional einen oder mehrere zusätzliche Komponenten, ausgewählt unter: Katalysatoren der an sich bekannten Art, wie tertiären Aminen und reaktiven (einbaubaren) Aminen;
Zinn(II)-Verbindungen und Zink-Verbindungen, oberflächenaktive Zusatzstoffe, wie Emulgatoren, Schaumstabilisatoren, Flammschutzmitteln, Sorbitol, Glycerin, Diaminen, Harnstoff, tertiären Aminen, und Stabilisatoren auf Siloxanbasis oder Nicht-Siloxanbasis.

Mittelharte Schaumstoffe stellen im Prinzip Weichschaumstoffe dar, lassen sich von diesen jedoch durch eine größere Stauchhärte abgrenzen, beispielsweise Stauchhärten von etwa 7 kPa oder mehr.

Die Hartschaumstoffe dieser besonderen Weiterbildung sind beispielsweise zu finden in Produkten wie Dämmplatten (auch als Sandwich-Elemente mit verschiedenen Deckschichten), Ortschaumstoffen, Spritzschaumstoffen, mit dem Überschichtungsverfahren hergestellten Schaumstoffen, Schaumstoffen für Sonnenkollektorfüllungen, Schaumstoffen für Rohrisolierungen, Füll-und Montageschaumstoffen und Blockschaumstoffen. Derartige Zusammensetzungen sind dem Fachmann hinreichend bekannt und werden zum Beispiel in der Schrift EP 0 318 784 A2 umfassend beschrieben.

Vorzugsweise umfassen diese Hartschaumstoffe folgende Bestandteile oder bestehen aus Kombinationen zweier oder mehrerer Vertreter daraus:

### Isocyanate:

2,4- und/oder 2,6-Toluylendiisocyanat (TDI) sowie beliebige Gemische dieser Isomere; 4,4'- und/oder 2,2'- Diphenylmethandiisocyanate (MDI) sowie beliebige Gemische dieser Isomere;
Polymer MDI ("Roh" - MDI) sowie mit mehrwertigen Polyolen (vorzugsweise zwei- und/oder dreiwertigen Polyethern) präpolymerisiertes MDI;
beliebige Gemische von TDI und MDI aus vorgenannten Isomeren und Ausbildungen, vorzugsweise jedoch Polymer MDI (Roh-MDI).

Gemäß einer besonderen Ausführungsform umfasst das Kunststoffmaterial einen Polyurethan-Hartschaumstoff oder besteht daraus, wobei die Umsetzung in einem Temperaturbereich von 198 °C bis 202 °C, insbesondere bei 200 °C erfolgt. Das Verfahren erfolgt vorzugsweise in einem pH-Bereich von 2 bis 4, beispielsweise bei pH 3, und/oder über einen Zeitraum von 3 bis 5 Stunden, beispielsweise über 4 Stunden. Diese Ausführungsform ist insbesondere geeignet zur Herstellung von Partikeln mit einer Größe von weniger als 4 µm oder weniger als 3 µm, bestimmt als Äquivalenzgröße über Laserlicht-Streuung.

Gemäß einer besonderen Ausführungsform umfasst das Kunststoffmaterial entweder einen Polyurethan-Weichschaumstoff oder besteht daraus, oder umfasst einen Polyurethan-Hartschaumstoff oder besteht daraus, wobei die Umsetzung in einem Temperaturbereich von 218 °C bis 222 °C, insbesondere bei 220 °C erfolgt. Das Verfahren erfolgt vorzugsweise in einem pH-Bereich von 2 bis 4, beispielsweise bei pH 3, und/oder über einen Zeitraum von 3 bis 5 Stunden, beispielsweise über 4 Stunden. Diese Ausführungsform ist insbesondere geeignet zur Herstellung von Partikeln mit einer Größe von weniger als 4 µm aus Polyurethan-Weichschaumstoff, oder von Partikeln einer Größe von weniger als 0,8 µm oder weniger als 0,3 µm, jeweils bestimmt als Äquivalenzgröße über Laserlicht-Streuung.

Gemäß einer besonderen Ausführungsform umfasst das Kunststoffmaterial einen mittelharten Polyurethanschaum oder besteht daraus, wobei die Umsetzung in einem Temperaturbereich von 198 °C bis 202°C erfolgt, gefolgt von einer mechanischen Zerkleinerung, einer optionalen Verringerung des Wassergehalts, und einem Zusetzen eines organischen Lösungsmittels. Nach dem Zusetzen des organischen Lösungsmittel, das beispielsweise Aceton, Isopropanol oder ein Gemisch davon darstellt, vorzugsweise jedoch Aceton, kann sich optional eine Zentrifugation zur Größenfraktionierung anschließen. Das durch die Zentrifugation erhaltene Sediment und der erhaltene Überstand werden getrennt, und ein organisches Lösungsmittel, das beispielsweise Aceton, Isopropanol oder ein Gemisch davon darstellt, vorzugsweise jedoch Isopropanol, wird jeweils dem Sediment beziehungsweise dem Überstand zugesetzt. Die mechanische Zerkleinerung erfolgt beispielsweise über Mahlen, etwa in einer Kugelmühle.

Bei allen Ausführungsformen des Verfahren, die ein Zusetzen von organischem Lösungsmittel umfassen, können die Partikel im Lösungsmittel für eine geplante Verwendung eingesetzt werden, oder das Lösungsmittel kann unter Erhalt getrockneter Partikel entfernt werden.

Gemäß einer allgemeinen Ausführungsform umfasst das Reaktionsgemisch 1 bis 75 Gewichtsprozent, vorzugsweise 2 bis 50 Gewichtsprozent, beispielsweise 3 bis 5 Gewichtsprozent Kunststoffmaterial, das ausgewählt ist unter Polyurethan, insbesondere Polyurethanschaumstoff, unter Polyester, insbesondere Polyethylenterephthalat, unter Schredderleichtfraktion oder unter Gemischen davon, also unter Gemischen von zwei oder mehr der vorgenannten Vertreter, sowie 0,1 bis 25 Gewichtsprozent biologisches Material, wobei jedoch ein Gewichtsverhältnis im Bereich von 750:1 bis 1,5:1 eingehalten wird, und wobei die Umsetzung bei einer Temperatur von 195 °C bis 225 °C, insbesondere 200 °C bis 220 °C erfolgt.

Das erfindungsgemäße Verfahren kann diskontinuierlich, kontinuierlich oder semikontinuierlich durchgeführt werden.

Beim diskontinuierlichen Verfahren, auch als Batch-Verfahren bekannt, werden die Ausgangsstoffe, also insbesondere das Kunststoffmaterial und das biologische Material, in ein Reaktionsgefäß eingebracht, den Reaktionsbedingungen ausgesetzt, und das Reaktionsprodukt, also der Kohleschlamm nach Ablauf der Reaktionsdauer entnommen. Anschließend wird das Reaktionsgefäß mit einer neuen Charge an Kunststoffmaterial beladen. Während der Reaktion wird kein neues Kunststoffmaterial zugeführt, gegebenenfalls kann jedoch Säure und/oder Base zugeführt werden, falls der tatsächliche pH-Wert zu sehr von dem Soll-pH-Wert oder Soll-pH-Bereich abweicht. Technisch bedingt kann nach Entnahme der Aufschlämmung von Partikeln des kohleähnlichen Feststoffs gegebenenfalls noch ein geringer Teil davon im Reaktionsgefäß verbleiben.

Beim kontinuierlichen Verfahren wird nicht einmalig vor Reaktionsbeginn Kunststoffmaterial in das Reaktionsgefäß eingespeist, sondern kontinuierlich, so dass zu jedem Zeitpunkt neues Kunststoffmaterial eingespeist wird. Analog wird ebenfalls kontinuierlich die erhaltene Aufschlämmung von Partikeln des kohleähnlichen Feststoffs entnommen. Üblicherweise erfolgen die Einspeisung und die Entnahme an unterschiedlichen Stellen, insbesondere kann das Reaktionsgemisch von der Stelle der Einspeisung bis zur Stelle der Entnahme geschoben oder durch aktive Fördermittel innerhalb des Reaktionsgefäßes transportiert werden. Entsprechend liegt an Stellen nahe der Einspeisungsstelle ein geringer Umsetzungsgrad vor, wobei das Reaktionsgemisch zur Entnahmestelle wandert oder transportiert wird und mit zunehmender Annäherung an die Entnahmestelle einen höheren Umsetzungsgrad aufweist.

Semikontinuierliche Verfahren stellen jede mögliche Übergangsform zwischen den beiden vorstehend genannten Verfahren. Beispielsweise kann die Entnahme der Aufschlämmung von Partikeln des kohleähnlichen Feststoffs nach Durchführung eines diskontinuierlichen Verfahrens nicht im Wesentlichen vollständig erfolgen, so dass ein Teil der Aufschlämmung auch einen Teil der Charge der nächsten Reaktion bildet. Die Aufschlämmung kann dann als eine Art von Startermaterial die Umsetzung des Kunststoffmaterials dieser nächsten Charge unterstützen, insbesondere, wenn noch nicht umgesetzte Zwischenprodukte in der Aufschlämmung enthalten sind. Als weiteres Beispiel kann als Abwandlung eines kontinuierlichen Verfahrens die Einspeisung von neuem Kunststoffmaterial nicht ständig erfolgen, so dass nicht zu jedem Zeitpunkt, sondern vielmehr nur zu bestimmten Zeitpunkten, beispielsweise periodisch, oder nach Feststellung eines bestimmten Umsetzungsgrads des im Reaktionsgefäß befindlichen Kunststoffmaterials, neues Kunststoffmaterial eingespeist wird.

Als Reaktionsgefäß kann beispielsweise jede Art von fachüblicher Vorrichtung verwendet oder vom Fachmann für die Zwecke des erfindungsgemäßen Verfahrens einfach angepasst werden. Beispiele hierfür sind Druckgefäße oder Druckreaktoren, die für eine chargenweise Befüllung ausgelegt sind und Reaktionsvolumina vom Labormaßstab, beispielsweise 0,1 bis 10 Liter über Zwischenbereiche von 10 Liter bis 1 Kubikmeter bis hin zum großindustriellen Maßstab im Bereich von 1 Kubikmeter bis zu Dutzenden oder Hunderten von Kubikmetern bereit stellen. Alternativ können die Druckgefäße oder Druckreaktoren für einen kontinuierlichen oder semikontinuierlichen Betrieb ausgelegt sein und Druckschleusen für das Einspeisen von Kunststoffmaterial beziehungsweise die Entnahme der Aufschlämmung von Partikeln des kohleähnlichen Feststoffs umfassen.

Im Rahmen eines erfindungsgemäßen Verfahrens kann insbesondere eine Verringerung des Wassergehalts der Aufschlämmung von Partikeln des kohleähnlichen Feststoffs vorgesehen sein, wobei das dabei gewonnene Reaktionsabwasser gegebenenfalls ganz oder teilweise einem Reaktionsgemisch wieder zugeführt wird. Beispielsweise kann es in das gleiche Verfahren zurückgeführt werden, in dessen Rahmen es angefallen ist, oder es kann, gegebenenfalls nach Lagerung, für ein weiteres erfindungsgemäßes Verfahren verwendet werden, welches zeitlich oder räumlich getrennt abläuft von demjenigen Verfahren, in dessen Rahmen das Reaktionsabwasser ursprünglich anfiel. Die Abtrennung des Reaktionsabwassers kann dabei direkt im Reaktionsgefäß erfolgen, beispielsweise durch Absaugen des Reaktionsabwassers über einen Filterstutzen, der partikuläres oder Feststoffmaterial ganz oder im Wesentlichen zurückhält, so dass ein hinsichtlich des partikulären oder Feststoffmaterials konzentrierteres Reaktionsgemisch zurückbleibt. Vorzugsweise wird jedoch das Reaktionsgemisch teilweise oder vollständig aus dem Reaktionsgefäß entnommen, so dass eine Abtrennung von Reaktionsabwasser außerhalb des Reaktionsgefäßes erfolgt. Das abgetrennte Reaktionsabwasser wird dann einem Reaktionsgemisch wieder zugeführt. Dabei kann es sich um dasselbe Reaktionsgemisch handeln, aus dem das Reaktionsabwasser ursprünglich entnommen wurde, wobei das Reaktionsabwasser auch in modifizierter Form zugeführt werden kann. Beispielsweise wird das Reaktionsabwasser mit veränderter Temperatur oder verändertem pH-Wert zugeführt, etwa um die Temperatur oder den pH-Wert im Reaktionsgefäß auf einen gewünschten Wert oder Bereich einzuregeln. Unverändertes Reaktionsabwasser kann insbesondere im diskontinuierlichen Betrieb verwendet werden, um teilweise oder vollständig das Reaktionsgemisch in einem neuen Reaktionsgefäß zu bilden. Im Rahmen einer thermischen Trocknung abgetrenntes Reaktionsabwasser kann gegebenenfalls nach Kondensierung ein neues Reaktionsgemisch bilden oder einem bereits bestehenden Reaktionsgemisch zugeführt werden.

Durch die erneute Zuführung des Reaktionsabwassers zu einem Reaktionsgemisch wird das Reaktionsabwasser mehrfach oder immer wieder erneut verwendet. Dies ist insbesondere vorteilhaft, wenn vergleichsweise niedrige oder hohe pH-Werte vorliegen, da das Reaktionsabwasser nicht neutralisiert oder als chemischer Müll entsorgt werden muss, sondern in praktischer Weise vollständig oder zumindest teilweise in einem Kreislauf im Verfahren verbleibt.
Die vorliegende Erfindung betrifft weiterhin eine Aufschlämmung von Partikeln des kohleähnlichen Feststoffs oder Partikel des kohleähnlichen Feststoffs, die jeweils im Rahmen eines Verfahrens gemäß den Ansprüchen oder der vorstehenden Beschreibung mit den dort beschriebenen Ausgestaltungen, Weiterbildungen oder Kombinationen davon erhältlich sind beziehungsweise erhalten wurden, also gegebenenfalls über diese Verfahren hergestellt wurden.

Gemäß der Erfindung weisen sich derartige Partikel, enthalten in einer derartigen Aufschlämmung oder aus dieser gewonnen in isolierter Form, dadurch aus, dass wenigstens 90 % der Partikel eine maximale Größe von maximal 75 µm aufweisen, wobei gegebenenfalls grobe Anteile der Aufschlämmung, etwa solche mit Größen von mehr als 0,04 Millimetern, 0,042 Millimeter, 0,125 Millimeter, einem oder zwei Millimeter entfernt werden oder nicht berücksichtigt werden, so dass entsprechend größenselektierte Fraktionen betrachtet werden, also beispielsweise solche im Größenbereich bis 0,04 Millimeter, 0,042 Millimeter, 0,125 Millimetern, einem oder zwei Millimeter. Gemäß einer weiteren Ausführungsform weisen sich derartige Partikel in isolierter Form oder enthalten in einer solchen Aufschlämmung dadurch aus, dass wenigstens 50 % der Partikel eine maximale Größe von maximal 25 µm aufweisen. Gemäß einer noch weiteren Ausführungsform weisen sich derartige Partikel in isolierter Form oder enthalten in einer solchen Aufschlämmung dadurch aus, dass wenigstens 10 % der Partikel eine maximale Größe von maximal 1 µm aufweisen. Partikel dieser Ausführungsform sind besonders geeignet für die nachfolgend offenbarten Verwendungen. Die Größe der Partikel wird dabei bestimmt als Äquivalenzgröße über ein Laser-Partikelmessgerät, welches die Vorgaben der Norm ISO 13320 erfüllt. Die Größe der Partikel liegt dementsprechend in zweistelligen oder einstelligen Mikrometerbereich, oder im Submikrometerbereich. Beispielsweise reichen die Größen der Partikel hinunter bis zum dreistelligen Nanometerbereich Für die Größenangaben im Rahmen der vorliegenden Erfindung kann insbesondere zugrunde gelegt werden eine Messung in einem Messbereich von 80 nm bis 42 µm.

Die Erfindung betrifft weiterhin die Verwendung von Aufschlämmungen von Partikeln eines kohleähnlichen Feststoffs oder von Partikeln eines kohleähnlichen Feststoffs selbst. Gemäß einer Ausführungsform werden Aufschlämmungen von Partikeln eines kohleähnlichen Feststoffs oder Partikel eines kohleähnlichen Feststoffs, erhalten über ein vorhergehend beschriebenes erfindungsgemäßes Verfahren, als Ruß-Ersatz beziehungsweise für die Herstellung eines Ruß-Ersatzes verwendet. Gemäß einer umfassenderen Ausführungsform werden Aufschlämmungen von Partikeln eines kohleähnlichen Feststoffs oder Partikel eines kohleähnlichen Feststoffs selbst als Ruß-Ersatz verwendet, die hergestellt sind durch Umsetzung eines wässrigen Reaktionsgemisches, das ein Kunststoffmaterial umfasst, enthaltend einen oder mehrere hydrolysierbare Kunststoffe, die vorzugsweise ausgewählt sind unter Polyurethanen und/oder Polyestern, und weiterhin biologisches Material umfasst, wobei das Gewichtsverhältnis von Kunststoffmaterial zu biologischem Material vorzugsweise 750:1 bis 1,5:1 beträgt, bei einem Druck von 2 bis 60 Bar und einer Temperatur von 180°C bis 250°C, vorzugsweise 195°C bis 225°C, in Gegenwart eines Katalysators, der ausgewählt ist unter einer Säure, einer Base und/oder einem Katalysator auf Metallbasis oder Schwefelbasis, über einen Zeitraum von 0,1 bis 48 Stunden, und Gewinnung der erhaltenen Aufschlämmung von Partikeln eines kohleähnlichen Feststoffs. An die Gewinnung der Aufschlämmung gemäß der umfassenderen Ausführungsform schließen sich vorzugsweise ein oder mehrere Schritte an, die ausgewählt sind unter einer Verringerung des Wassergehalts zur Gewinnung der Partikel, einer Lösungsmittelbehandlung und/oder einem Zerkleinerungsschritt zur Erhöhung der Anzahl von Partikeln und/oder einer Größenfraktionierung. In der genannten umfassenderen Ausführungsform sind Kunststoffmaterial, biologisches Material, Umsetzungszeiträume, Säuren, Basen und Katalysatoren auf Metall- oder Schwefelbasis, gegebenenfalls pH-Werte oder pH-Bereiche und gegebenenfalls weitere Details der Prozessführung wie oben definiert Der Gewichtsanteil von 1 bis 75 Gewichtsprozent Kunststoffmaterial bezieht sich auf das Gesamtgewicht des Reaktionsgemisches und umfasst beispielsweise 2 bis 50 Gew.-%, 5 bis 40 Gew.-%, 10 bis 30 Gew.-%, oder 15 bis 25 Gew.-%, beispielsweise also etwa 5, 10 15, 20, 25, 30, 35, 40, 45 , 50, 55, 60, 65, 70 oder 75 Gewichtsprozent. Vorzugsweise stellen weniger als 10 Gewichtsprozent der in dem Kunststoffmaterial enthaltenen Kunststoffe polyhalogenierte Kunststoffe dar.

Die Erfindung betrifft in einem weiteren Aspekt somit einen Ruß-Ersatz, der eine entsprechende Aufschlämmung von Partikeln eines kohleähnlichen Feststoffs oder Partikel eines kohleähnlichen Feststoffs umfasst oder daraus besteht. Im einfachsten Fall besteht der Ruß-Ersatz somit aus einer Aufschlämmung von Partikeln eines kohleähnlichen Feststoffs, die direkt verwendet werden kann, oder aus Partikel des kohleähnlichen Feststoffs, die direkt verwendet werden können. In einer optionalen Weiterbildung umfasst der Ruß-Ersatz einen oder mehrere Zusatzstoffe, die - je nach beabsichtigter Verwendung des Ruß-Ersatzes - unabhängig voneinander ausgewählt sind unter Algiziden, Basen, Bioziden, Dispergiermitteln, elektrisierbare Metallpartikel, Emulgatoren, Entschäumern, Farbstoffen, Flammhemmstoffen, Fließverbesserern, Fungiziden, Gefrierschutzmitteln, Geruchsstoffen, Konservierungsstoffen, oberflächenaktiven Mitteln, Pigmenten, Puffersubstanzen, Säuren und/oder Rheologieadditiven, Trägersubstanzen wie Fetten, Wachsen, Ölen oder Emulsionen, UV-Hemmstoffen, weiteren nachfolgend noch genannten Zusatzstoffen, und dergleichen. Die vorliegende Erfindung stellt somit vorteilhaft Möglichkeiten bereit, so genannten Industrie-Ruß durch einen Ruß-Ersatz zu ersetzen, der in ressourcenschonender Weise hergestellt wird durch Umsetzung bereits vorliegenden Kunststoffmaterials. Industrie-Ruß ist ein wichtiges technisches Zwischenprodukt, das in einer Vielzahl von Endprodukten Verwendung findet. Industrie-Ruß ist dem Fachmann wohlbekannt und wird beispielsweise hergestellt als Verbrennungsruß durch unvollständige Verbrennung von Kohlenwasserstoffen oder als Spaltruß durch thermische Zersetzung. Herkömmlicherweise wird Industrie-Ruß in thermischen Reaktoren, insbesondere Öfen hergestellt, in denen ein Brennstoff zusammen mit Luft kontrolliert verbrannt wird, wie beispielsweise beschrieben in den Patenten US 7,431,909 B1 und US 7,655,209 B2.

Gemäß einer Ausführungsform umfasst der Ruß-Ersatz 1 bis 99 Gewichtsprozent an Partikeln des kohleähnlichen Feststoffs, beispielsweise bis zu 99 Gewichtsprozent, bis zu 95 Gewichtsprozent, bis zu 90 Gewichtsprozent, bis zu 80 Gewichtsprozent, bis zu 70 Gewichtsprozent, bis zu 60 Gewichtsprozent, bis zu 50 Gewichtsprozent, bis zu 40 Gewichtsprozent, bis zu 30 Gewichtsprozent, bis zu 20 Gewichtsprozent, bis zu 10 Gewichtsprozent, oder bis zu 5 Gewichtsprozent, und weiterhin entsprechend 99 bis 1 Gewichtsprozent Industrie-Ruß, beispielsweise bis zu 99 Gewichtsprozent, bis zu 95 Gewichtsprozent, bis zu 90 Gewichtsprozent, bis zu 80 Gewichtsprozent, bis zu 70 Gewichtsprozent, bis zu 60 Gewichtsprozent, bis zu 50 Gewichtsprozent, bis zu 40 Gewichtsprozent, bis zu 30 Gewichtsprozent, bis zu 20 Gewichtsprozent, bis zu 10 Gewichtsprozent, oder bis zu 5 Gewichtsprozent Industrie-Ruß. Der Ruß-Ersatz dieser Ausführungsform kann ausschließlich aus Partikeln des kohleähnlichen Feststoffs und aus Industrie-Ruß bestehen, oder zusätzlich einen oder mehrere Zusatzstoffe, beispielsweise gemäß vorstehender nicht abschließender Aufzählung umfassen, die Differenzmengen zu 100 Gewichtsprozent bereitstellen.

Ein weiterer Gegenstand der Erfindung betrifft die Verwendung eines solchen Ruß-Ersatzes als Füllstoff, als Verstärkerfüllstoff, als UV-Stabilisator, als Leitfähigkeitsvermittler, als Pigment, als Bestandteil von oder als Beimischung zu Farbzusammensetzungen, Tinten, Tonern, kosmetischen Zusammensetzungen, Baustoffen, Kunststoffen, oder Kautschuken, und somit auch entsprechende Farbzusammensetzungen, kosmetische Zusammensetzungen, Baustoffe, Kunststoffe, oder Kautschuke, die einen erfindungsgemäßen Ruß-Ersatz umfassen, beziehungsweise die Verwendung eines solchen Ruß-Ersatzes zur Herstellung der vorgenannten Produkte, sowie diese vorgenannten Produkte, die einen Ruß-Ersatz umfassen oder daraus bestehen.

Ruß-Ersatz als Füllstoff dient dazu, einen Teil des Volumens eines Materials bereitzustellen. Ruß-Ersatz als Verstärkerfüllstoff stellt nicht nur Volumen bereit, sondern trägt dazu bei, bestimmte Eigenschaften des Materials bereitzustellen. Ruß-Ersatz als UV-Stabilisator absorbiert ultraviolette Strahlung und/oder trägt dazu bei, die UV-Beständigkeit des Materials, in dem er enthalten oder auf dem er aufgetragen ist, zu erhöhen. Ruß-Ersatz als Leitfähigkeitsvermittler ermöglicht das Leiten von elektrischem Strom und ist beispielsweise geeignet für die Herstellung von Elektroden oder Stromleitpasten. Ruß-Ersatz als Pigment stellt selbst eine Eigenfarbe bereit oder ist dazu geeignet, im Zusammenspiel mit anderen Pigmenten oder Farbstoffen deren Farben und somit die letztendlich von einem Betrachter wahrgenommene Farbe zu modifizieren.

Als Farbzusammensetzungen werden im Rahmen der vorliegenden Erfindung beliebige Produkte, ausgenommen kosmetische Zusammensetzungen, bezeichnet, die zur Erzeugung einer bunten oder unbunten Farbe auf einem Untergrund oder in einer Flüssigkeit, oder zur Erzeugung von grafischen Elementen oder Schriftzeichen auf einem Untergrund verwendet werden können. Nicht-beschränkende Beispiele für Farbzusammensetzungen sind Dispersionsfarben, Tinten und Toner. Vorteilhaft werden im Rahmen der Erfindung Partikelgrößen vom Submikrometerbereich bis hin zum zweistelligen Mikrometerbereich bereitgestellt, die für derartige Anwendungen besonders geeignet sind. Beispielsweise beträgt der Gewichtsanteil der Partikel oder des Ruß-Ersatzes 1 bis 80 Gewichtsprozent, 5 bis 50 Gewichtsprozent, 7 bis 35 Gewichtsprozent, oder 10 bis 20 Gewichtsprozent, jeweils bezogen auf das Gesamtgewicht der Farbzusammensetzung.

Der Ruß-Ersatz findet somit Verwendung in Dispersionsfarben oder für die Herstellung von Dispersionsfarben, worunter jegliche Art von Farben auf der Grundlage von Dispersionen in wässrigen oder organischen Flüssigkeiten oder Emulsionen verstanden wird. Beispiele dafür sind dünnflüssige Lacke und dickflüssige Anstriche, die etwa für Hauswände verwendet werden, und Deckfarben, also in Wasser suspendierbare Farben aus Pigmenten und Füllstoffen. Der Ruß-Ersatz dient dabei als Pigment und verleiht der Dispersionsfarbe seine Farbe, oder modifiziert die gegebenenfalls durch weitere Pigmente und/oder Farbstoffe vorgegebene Farbe der Dispersionsfarbe. Entsprechende Dispersionsfarben enthalten optional ein oder mehrere weitere Pigmente in dispergierter Form und/oder ein oder mehrere Farbstoffe in gelöster Form, und/oder ein oder mehrere zusätzliche fachübliche Hilfsstoffe, die beispielsweise ausgewählt sein können unter Algiziden, Basen, Bioziden, Fungiziden, Dispergiermitteln, Entschäumern, Gefrierschutzmitteln, oberflächenaktiven Mitteln, Puffersubstanzen, Säuren und/oder Rheologieadditiven. Ruß-Ersatz enthaltende oder daraus bestehende Dispersionsfarben sind somit ebenfalls ein Gegenstand der vorliegenden Erfindung.

Der Ruß-Ersatz findet somit weiterhin Verwendung in Tinten oder bei deren Herstellung, wobei unter Tinten dünnflüssige Aufschlämmungen oder Dispersionen verstanden werden, die optional zusätzlich einen oder mehrere weitere Zusatzstoffe enthalten können. Nicht-beschränkende Beispiele für derartige weitere Zusatzstoffe, von denen ein oder mehrere Vertreter unabhängig voneinander in den Tinten enthalten sein können, sind lösliche Farbstoffe einschließlich fluoreszierender Farbstoffe; anorganische und/oder organische Lösungsmittel, wie etwa Ethanol, Ethylacetat, Toluol und/oder Xylol und/oder jeweils Derivate davon; Dispergier-Hilfsmittel; Bindemittel für eine verbesserte Haftung auf dem beschriebenen oder bemalten Papier oder Untergrund, wie etwa Schellack-Lösungen oder Kunstharz-Lösungen, beispielsweise verseiften Acrylharz-Lösungen; thixotrope Zusatzstoffe wie etwa Kieselgele; Puffersubstanzen; Verdickungsmittel, etwa für dickflüssige oder pastenartige Tinten, beispielsweise ausgewählt unter Polysacchariden wie etwa Carboxymethylcellulose oder Hydroxypropylcellulose, Xanthangummen, Guargummen, Welangummen, Gummi arabicum, Traganth, unter synthetischen Polymeren wie Polymeren auf Acrylbasis, Polymeren auf Urethanbasis und vernetzenden Acrylsäurepolymeren, und/oder unter anorganischen Substanzen wie etwa Aluminiumsilikat, Smectit und Montmorillonit, und Gemischen davon, und/oder quellenden Eiweißen, wie etwa Gelatine; Konservierungsmittel; grenzflächenaktive Mittel und Duftstoffe.

Nicht-beschränkende Beispiele für Tinten, die jeweils optional zusätzlich einen oder mehrere lösliche Farbstoffe enthalten können, sind Tinten für Füllfederhalter; Tinten für Kugelschreiber, die vorzugsweise ein oder mehrere Verdickungsmittel enthalten; Gel-Tinten, die vorzugsweise einen oder mehrere thixotrope Zusatzstoffe enthalten; Tinten für Tintenstrahldrucker; und Tuschen.

Beispiele von Tonern sind solche, die in Druckern oder Fotokopiergeräten verwendet werden. Vorzugsweise werden dafür Partikel eines kohleähnlichen Feststoffs im einstelligen Mikrometerbereich oder im Submikrometerbereich verwendet.

Ruß-Ersatz enthaltende oder daraus bestehende Tinten oder Toner sind somit ebenfalls ein Gegenstand der vorliegenden Erfindung.

Weiterhin betrifft die Erfindung kosmetische Zusammensetzungen, die einen Ruß-Ersatz enthalten oder daraus bestehen, beispielsweise Wimperntuschen, Eyeliner, Lidschatten, gefärbte Haargele, Lippenstifte, Nagellacke, kosmetische Puder, Gesichtsfarben, etwa für Karneval- oder Sportveranstaltungen, und Tätowiertinten. Die kosmetischen Zusammensetzungen enthalten optional einen oder mehrere Zusatzstoffe, wie beispielsweise Füllstoffe; Verdickungsmittel, wie etwa Traganth; ölige, wachartige oder emulsionsartige Grundstoffe; Farbstoffe; Geruchsstoffe; UV-Hemmstoffe; und/oder Konservierungsmittel.

Weiterhin betrifft die Erfindung Baustoffe, die einen erfindungsgemäßen Ruß-Ersatz umfassen, beispielsweise Beton, Gips, Spachtelmasse oder Keramiken wie Fliesen, deren Farbe und/oder Konsistenz durch Zusatz von Ruß-Ersatz modifiziert ist.

Weiterhin betrifft die Erfindung Kunststoffe, die einen erfindungsgemäßen Ruß-Ersatz umfassen. Der Ruß-Ersatz kann insbesondere die Farbe der Kunststoffe bereitstellen, oder eine im Kunststoff bereits vorliegende Farbe zu modifizieren.

Weiterhin betrifft die Erfindung Kautschuke, die einen erfindungsgemäßen Ruß-Ersatz umfassen. Der Begriff "Kautschuk" wird im Rahmen der Erfindung als allgemeiner Oberbegriff für Naturkautschuke und synthetische Kautschuke verstanden. Nicht beschränkende Beispiele für synthetische Kautschuke sind Chloropren-Kautschuk (CR gemäß DIN ISO 1629), Ethylen-Propylen-Dien-Kautschuk (EPDM), Acrynitril-Butadien-Kautschuk (NBR), Polybutadien-Kautschuk (BR), Polyisopren-Kautschuk (IR), Isobutylen/Isopren-Kautschuk (IIR), Styrol-Butadien-Kautschuk (SBR), Styrol-Butadien-Latex (SBL) sowie Silikon-Kautschuk (VMQ), weiterhin die vorgenannten Kautschuke modifiziert mit zusätzlichen funktionellen Gruppen wie etwa Carboxy-, Epoxy- oder Silanonylgruppen, sowie Mischungen zweier oder mehrerer dieser nicht modifizierten oder modifizierten Kautschuke. Der Begriff umfasst insbesondere auch Gummi als vulkanisierten Kautschuk, beispielsweise Weichgummi mit einem Anteil von etwa 5 bis 10 Gewichtsprozent Schwefel und Hartgummi mit einem Anteil von etwa 30 bis 50 Gewichtsprozent Schwefel.

Kautschuk, der einen erfindungsgemäßen Ruß-Ersatz umfasst, wird gemäß besonderen Ausgestaltungen verwendet für Kautschukmatten, für Dichtungen, für druckaufnehmende Teile wie etwa Gummilager, für Kleidungsstücke wie etwa Regen- oder Nässeschutzkleidung oder Regen- oder Nässeschutzschuhe, beispielsweise Regenumhänge oder Anglerhosen und Gummistiefel, für Taucheranzüge, für gummierte Planen, oder für Fahrzeugreifen, beispielsweise als Innenschicht oder als Lauffläche. Insbesondere für Fahrzeugreifen werden vorzugsweise Partikel des kohleähnlichen Feststoffs im Submikrometerbereich im Ruß-Ersatz bereitgestellt. Bei Kautschuk für Fahrzeugreifen kann der erfindungsgemäße Ruß-Ersatz insbesondere als Verstärkerfüllstoff verwendet werden, der nicht nur Volumen im Sinne eines Füllstoffs auffüllt, sondern dazu beiträgt, der Kautschukmischung eine oder mehrere gewünschte Eigenschaften zu erreichen, beispielsweise einen gewünschten Abriebwiderstand, eine gewünschte Reißfestigkeit und/oder Haftung.

Für den Fachmann ist es ersichtlich, dass je nach Anwendung Aufschlämmungen von Partikeln eines kohleähnlichen Feststoffs direkt verwendet werden können, gegebenenfalls nach Austausch des Reaktionsabwassers durch eine kontrollierte wässrige oder flüssige Phase, oder Partikel in getrockneter Form verwendet werden. Insbesondere bei Farbzusammensetzungen, die in einer flüssigen Phase, insbesondere in einer wässrigen Phase vorliegen, wie etwa bestimmte Dispersionsfarben und Tinten, ebenso wie bei kosmetischen Produkten auf Wasserbasis kann eine Aufschlämmung von Partikeln eines kohleähnlichen Feststoffs Verwendung finden, gegebenenfalls nach Austausch des Reaktionsabwassers durch eine kontrollierte wässrige Phase. Alternativ können die Partikel eines kohleähnlichen Feststoffs in getrockneter oder im Wesentlichen wasserfreier Form im Rahmen der Herstellung solcher Produkte zugegeben werden, beispielsweise bei kosmetischen Pudern, Tonern oder im Rahmen der Kautschukverarbeitung.

In Kenntnis des hier offenbarten Erfindungsgedankens ist der Fachmann in der Lage, die vorstehend genannten Ausführungsformen und Weiterbildungen des erfindungsgemäßen Verfahrens, sowie einzelne von deren Merkmalen, zu kombinieren, so dass entsprechende Kombinationen ebenfalls erfindungsgemäß erfasst sind. Die Erfindung wird nun weiter veranschaulicht anhand von Beispielen, in denen unter anderem mehrere Ausführungsformen detailliert beschrieben sind. Beschriebene Merkmale bilden für sich oder in beliebiger, sinnvoller Kombination den Gegenstand der Erfindung, gegebenenfalls auch unabhängig von den Ansprüchen, und können insbesondere zusätzlich auch Gegenstand einer oder mehrerer separaten Anmeldung/en sein.

Die Erfindung wird nun, gegebenenfalls unter Bezugnahme auf die Figuren, weiter erläutert. Dabei zeigen
- Fig. 1: Partikel nach Umsetzung verschiedener PUR-Arten bei 220°C
- Fig. 2: Partikel nach Mahlen und Lösungsmittelbehandlung
- Fig. 3: Partikel nach Mahlen, Lösungsmittelbehandlung und Überstandsgewinnung
- Fig. 4: Partikel nach Mahlen, Lösungsmittelbehandlung und Sedimentation
- Fig. 5: Rasterelektronenmikroskopische Darstellung von Partikeln
- Fig. 6: Vergleich zwischen Klarlack und Weißlack nach Zumischung von Partikeln.

### Beispiele

### Allgemeine Methoden

### Bestimmung der Größenverteilung von Partikeln

Die Größenverteilung wurde durch Streuung von Laserlicht unter Verwendung einer Analysette 22 Micro Tec plus (Fritsch) bestimmt, wobei gemäß einem dem Fachmann bekannten Prinzip Äquivalenzgrößen von Partikeln ermittelt wurden. Für die Messungen wurden die Partikel in Isopropanol aufgenommen. Als Ergebnis wurden erhalten die Kennzahl Q3(x), die angibt, wie viel Prozent des gesamten Probenvolumens in Partikeln kleiner einer bestimmten Partikelgröße enthalten, oder die Kennzahl dQ3(x), die angibt, wie viel Prozent des gesamten Probenvolumens in Partikeln stecken, die in einem bestimmten Größenintervall liegen. Die Partikelgröße entspricht dabei einer Äquivalenzgröße, also dem Durchmesser eines idealisierten sphärischen Partikels, welches das gleiche Mess-Signal in der Laserlicht-Streuung erzeugen würde. Die Darstellung in den Figuren erfolgte gemäß der DIN-Norm bezüglich der Partikelgrößenverteilungen DIN ISO 9276-1 (Darstellung der Ergebnisse von Partikelgrößenanalysen - Teil 1: Grafische Darstellung).

### Gemahlene Proben

Proben, deren Größe nach zusätzlichem Mahlen untersucht werden sollte, wurden in einem elektrischen Reaktor hergestellt und anschließend in einer Mühle (Dyno®-mill, Typ: KDL-SPECIAL, Willy A. Bachofen AG Machinenfabrik, Basel, Schweiz) 45 min mit Keramikkugeln mit einer Größe zwischen 1,0 mm und 1,6 mm gemahlen. Die weitere Probenbehandlung ist in den entsprechenden Beispielen genannt.

### Rasterelektronenmikroskopie (REM)

Für die Rasterelektronenmikroskopie wurde ein JSM - 6610 Rasterektronenmikroskop verwendet (Jeol Germany GmbH). Als elektrischer Leiter kam Gold zum Einsatz. Die für diese Untersuchungen verwendeten Proben wurden in einem Ofen 24 Stunden bei 60 °C getrocknet.

### Durchführung des erfindungsgemäßen Verfahrens

Zur Durchführung des Verfahrens wurden, soweit nicht anders angegeben, 250ml Aufschlussgefäße (Berghof Products + Instruments GmbH, Eningen, Deutschland) verwendet, um die große Anzahl der im Rahmen der Erfindung bearbeiteten Proben schnell durchzusetzen. Die Aufschlussgefäße wurden bei der entsprechenden Temperatur in einen temperaturgeregelten Ofen gestellt. Aufgrund der maximal zulässigen Temperaturänderung der Aufschlussgefäße von 50K/h wurde der Ofen nicht auf 200 °C oder eine andere, vergleichbar hohe Temperatur vorgeheizt, sondern wurde zusammen mit dem Inhalt erwärmt. Der Reaktionszeitraum begann mit Erreichen der Solltemperatur zu laufen. Nach Ende der Reaktionszeit erfolgt ein Abkühlen durch Ausschalten des Ofens und Öffnen von dessen Tür.

### Beispiel 1 - Herstellung von Aufschlämmungen von Partikeln eines kohleähnlichen Feststoffs

Es wurden drei Arten von Polyurethan-Schaumstoffen verwendet:
- Weich-Schaumstoff (GV 5018, Lot 1296), in den Tabellen als "weich" bezeichnet
- mittelharter Schaumstoff (N6070 1299), in den Tabellen als "medium" oder "mittel" bezeichnet
- Hart-Schaumstoff (1483-16), in den Tabellen als "hart" bezeichnet.

Der Weich-Schaumsstoff wies folgende Herstellungs-Zusammensetzung auf:
89,5 Teile Etherpolyole 3-funktional
10,5 Teile Etherpolyole 4-funktional
64,7 Teil MDI (Mischung aus Polymer-MDI und Präpolymer MDI)
1,5 Teile Stabilisator
7,25 Teile Alkohole
2,1 Teile Katalysatoren
3 Teile Wasser

Der mittelharte Schaumsstoff, der im Prinzip der Klasse der Weichschaumstoffe zuzuordnen ist und aufgrund seiner Stauchhärte als mittelhart klassifiziert wurde (Raumgewicht von brutto 60 kg/m³ und eine Stauchhärte von 7,0 KPa) wies folgende Herstellungs-Zusammensetzung auf:
40 Teile hochgefülltes SAN Etherpolyol 3 -funktional
60 Teile Standard Etherpolyol 3 -funktional
21,66 Teile TDI (Mischung aus T80 und T65)
1 Teil Stabilisator
0,56 Teile Katalysatoren
1,56 Teile Wasser

Als Hart-Schaumstoff wurden zerkleinerte PUR-Hartschaumplatten des Typs "EUROWALL®" (bezogen von Recticel IDC, 9230 Wetteren, Belgien) verwendet. Die PUR-Hartschaumplatten enthielten 100 Gewichtsanteile einer Polyolmischung (Polyether-und Polyesterpolyole) mit einer Funktionalität von 3,7 bis 4,5, 10 Gewichtsanteile Flammschutzmittel, 0,5 bis 1 Gewichtanteile Wasser, 15 bis 25 Gewichtsanteile Pentan als Schäumungsmittel, 2 bis 2,5 Gewichtsanteile grenzflächenaktives Mittel auf Silikonbasis, 1,5 bis 2,5 Gewichtsanteile sowie 180 bis 220 Gewichtsanteile polymeres MDI mit einer Funktionalität von 2,6 bis 2,9.

Die Schaumstoffe wurden mit einer Universalschneidmühle 19/Kraft-Schneidmühle 25 (Pulverisette 19/25) von Fritsch (Fritsch GmbH, Idar-Oberstein, Deutschland) zu einem Pulver zermahlen. Für die Umsetzung wurden - sofern nicht anders angegeben
- 250 ml Reaktionsgefäße (auch als "Bomben" bezeichnet) der Firma Berghof verwendet. Als Reaktionsgemisch wurde verwendet:
- 4,725 g der jeweiligen Schaumstoffe
- 2,725 g Weizenmehl
- 110ml Wasser, pH 3
- Eisensalz (Ammonium-Eisen-(II)-sulfat-Hexahydrat), in gelöster Form in einer Menge von - je nach Experiment - 0,35 g bis 2 g.

Die nachfolgende Tab. 1 zeigt die damit erstellten Proben an und gibt Hinweise auf gegebenenfalls weitere damit durchgeführte Versuche:

**Tab. 1**

| **Probe Nr.** | **Schaumstoff** | **pH** | **Eisen (Salz) [g]** | **T [°C]** | **Zeit** | **Laser-Messung Proben-ID** | **Gewicht d. getrock-neten Proben [g]** | **REM-ID** |
|---|---|---|---|---|---|---|---|---|
| 1 | weich | pH 3 | - | 200 | 4 h | 560 (GB) | 3,5036 | |
| | | | | | | 636 (TB) | | |
| 2 | weich | pH 3 | - | 200 | 8 h | | 3,6538 | |
| 3 | weich | pH 3 | - | 220 | 4 h | 596 (TB) | 3,5145 | bt-023 |
| | | | | | | | | bt-63 |
| | | | | | | | | bt-125 |
| | | | | | | | | bt-200 |
| 4 | weich | pH 3 | - | 220 | 8 h | | 2,3970 | bt-04 |
| 5 | weich | pH 3 | 1 | 200 | 4 h | 585 (GB) | | bt-05 |
| | | | | | | 812 (TB) | | |
| 6 | weich | pH 3 | 0,5 | 200 | 4 h | | | |
| 7 | weich | pH 3 | 2 | 200 | 4 h | | | |
| 8 | weich | pH 3 | 0,35 | 200 | 4 h | | | bt-08 |
| 9 | medium | pH 3 | - | 200 | 4 h | 597 GB) | 3,1445 | bt-09 |
| | | | | | | 820 (TB) | | |
| 10 | medium | pH 3 | - | 200 | 8 h | | 4,2413 | |
| 11 | medium | pH 3 | - | 220 | 4 h | 598 (TB) | 3,6693 | bt-024 |
| 12 | medium | pH 3 | - | 220 | 8 h | | 4,1383 | bt-12 |
| 13 | medium | pH 3 | 1 | 200 | 4 h | | | bt-13 |
| 14 | medium | pH 3 | 0,5 | 200 | 4 h | | | |
| 15 | medium | pH 3 | 2 | 200 °C | 4 h | | | |
| 16 | medium | pH 3 | 0,35 | 200 | 4 h | | | bt-016 |
| 17 | hart | pH 3 | - | 200 | 4 h | 697 (GB) | 3,7603 | bt-17 |
| | | | | | | 821 (TB) | | |
| 18 | hart | pH 3 | - | 200 | 8 h | | 4,1682 | |
| 19 | hart | pH 3 | - | 220 | 4 h | 599 (GB) | 3,2457 | bt-022 |
| | | | | | | 813 (TB) | | |
| 20 | hart | pH 3 | - | 220 | 8 h | | 3,2604 | |
| 21 | hart | pH 3 | 1 | 200 | 4 h | | | b-21 |
| 22 | hart | pH 3 | 0,5 | 200 | 4 h | | | |
| 23 | hart | pH 3 | 2 | 200 | 4 h | | | |
| 24 | hart | pH 3 | 0,35 | 200 | 4 h | | | bt-24 |

"GB" steht für "Gesamtbereich" ("full range") des durch Laserstreuung messbaren Größenspektrums der Partikel, "TB" steht für "Teilbereich" ("fine range"), bei dem nur Messwerte für Partikel unterhalb einer Partikelgröße von etwa 40 µm angegeben sind. Die entsprechenden Drücke waren die sich bei den gegebenen Temperaturbedingungen einstellenden Gleichgewichtsdrücke zwischen flüssiger und gasförmiger Phase des Reaktionsgemisches. Die Proben für die Messungen basierten - sofern nicht anders angegeben - auf den unfiltrierten flüssigen Phase der Bomben, die getrocknet und für die Messungen in Isopropanol aufgenommen wurden.

Zusätzlich wurden noch folgende Extraproben (ES) hergestellt, wobei ab einschließlich der Proben ES 7 ein elektrischer Reaktor mit einem Volumen von 3000 ml verwendet wurde und das Reaktionsgemisch in 2000 ml Wasser 54 g des jeweiligen Schaumstoffs und 26 g Weizenmehl umfasste.

**Tab. 2**

| **Probe Nr.** | **Schaum-stoff** | **pH** | **Eisen (Nanopartikel) [ml]** | **T [°C]** | **Zeit [h]** | **Laser-Messung Proben-ID (ggf. Siebgröße [µm])** | **Gewicht d. getrockneten Proben [g]** |
|---|---|---|---|---|---|---|---|
| ES 1 | hart | 2 | - | 200 | 4 | | 1,4313 |
| ES 2 | hart | 4 | - | 200 | 4 | | 1,6587 |
| ES 3 | weich | 2 | - | 200 | 4 | 703 (GB | 2,6837 |
| | | | | | | 823 (TB) | |
| ES 4 | weich | 4 | - | 200 | 4 | | 2,1259 |
| ES 5 | weich | 2 | 0,33 | 200 | 4 | 577 (GB) | 1,4864 |
| | | | | | | 830 (TB) | |
| ES 6 | weich | 2 | 0,66 | 200 | 4 | 564 (GB) | 1,2983 |
| | | | | | | 829 (TB) | |
| | | | 2 | | | 566 GB) | |
| | | | | | | 822 (FS) | |
| | | | | | | 539 (TB, 63 µm) | |
| ES 7 | weich | 2 | | 200 | 4 | 638 (TB, 125 µm) | |
| | | | | | | 640 (TB, 200 µm) | |
| | | | | | | 548 (TB, nanofilter) | |
| ES 8 | weich | 12 | | 200 | 4 | | 9,0142 |
| ES 9 | hart | 3 | - | 200 | 4 | 960-964 (GB) | |
| C.L | | | | | | 972 (TB) | |
| ES 9 | hart | 3 | - | 200 | 4 | 101-105 (GB) | |
| C.S | | | | | | 1027 (TB) | |
| ES 9 | hart | 3 | - | 200 | 4 | 1019 (GB) | |
| C.R | | | | | | 1022 (TB) | |
| ES 10 | medium | 3 | - | 200 | 4 | 933-977 (GB) | |
| C.L | | | | | | 984 (TB) | |
| ES 10 | medium | 3 | | 200 | 4 | 996-100 (GB) | |
| C.S | | | | | | 1026 (TB) | |
| ES 10 | medium | 3 | | 200 | 4 | 1022 (GB) | |
| C.R | | | | | | 1030 (TB) | |
| ES 11 | medium | 3 | | 200 | 4 | 997-983 (GB) | |
| C.L | | | | | | 985 (TB) | |
| ES 11 | medium | 3 | | 200 | 4 | 991-995 (GB) | |
| C.S | | | | | | 985 (TB) | |
| ES 11 | medium | 3 | - | 200 | 4 | 1011-1015 (GB) | |
| C.R | | | | | | 1028 (TB) | |

### Details zu einzelnen Extraproben:

ES 7: Untersucht wurde Probenmaterial, das auf Sieben mit einer Ausschlussgröße von 200, 125 oder 63 µm oder auf einem Nanofilter (0,2 µm) zurückgehalten wurde. Bei den Proben ES 9, 10 und 11 bezeichnen die die nachgestellten Indices C.L, C.S und C.R Proben aus dem Überstand einer zweiten Zentrifugation, aus dem Sediment einer zweiten Zentrifugation beziehungsweise gemahlene Proben aus einer Aufschlämmung wie unten näher erklärt.

Auf die in den Tabellen 1 und 2 aufgeführten Proben wird gegebenenfalls in den nachfolgenden Beispielen eingegangen, wobei nicht zwangsläufig alle der angegebenen Daten in den Beispielen behandelt werden.

### Beispiel 2 - Größenbestimmung von erfindungsgemäßen Partikeln eines kohleähnlichen Feststoffs

### Beispiel 2.1 Vergleich von Weichschaumstoff, mittelhartem Schaumstoff und Hartschaumstoff

Über Laserlicht-Streuung wurden die Größen von Partikeln der Proben 1, 9 und 17 aus Tab. 11 gemessen, womit ein Vergleich der Umsetzung von Polyurethan-Weichschaumstoff, mittelharter Polyurethanschaumstoff und Polyurethan-Hartschaumstoff bei einer Temperatur von 200°C erfolgte. Die Messungen wurden in einem Teilbereich von 80 nm bis 42 µm durchgeführt, deren Ergebnisse tabellarisch in Tab. 3 gezeigt sind:

**Tab. 3**

| Q3 (x) % | Messung 636 Probe 1 (weich) | Messung 820 Probe 9 (medium) | Messung 821 Probe 17 (hart) |
|---|---|---|---|
| 10 | < 0,8 µm | < 2,5 µm | < 0,4 µm |
| 50 | < 2,9 µm | < 10 µm | < 0,9 µm |
| 90 | < 9,6 µm | < 17 µm | < 2,3 µm |

Die Ergebnisse zeigten, dass die bei Hartschaum erhaltene Aufschlämmung insgesamt den größten Anteil an kleinen Partikeln von weniger als 42 µm aufwies, da 90% der Partikel einer Äquivalenzgröße von weniger als 2,3 µm entsprachen, 50% im Submikrometerbereich lagen und 10% kleiner als 400 Nanometer waren.

Alle nachfolgend beschriebenen Messungen wurden jeweils in dem Teilbereich von 80 nm bis 42 µm durchgeführt.

### Beispiel 2.2:

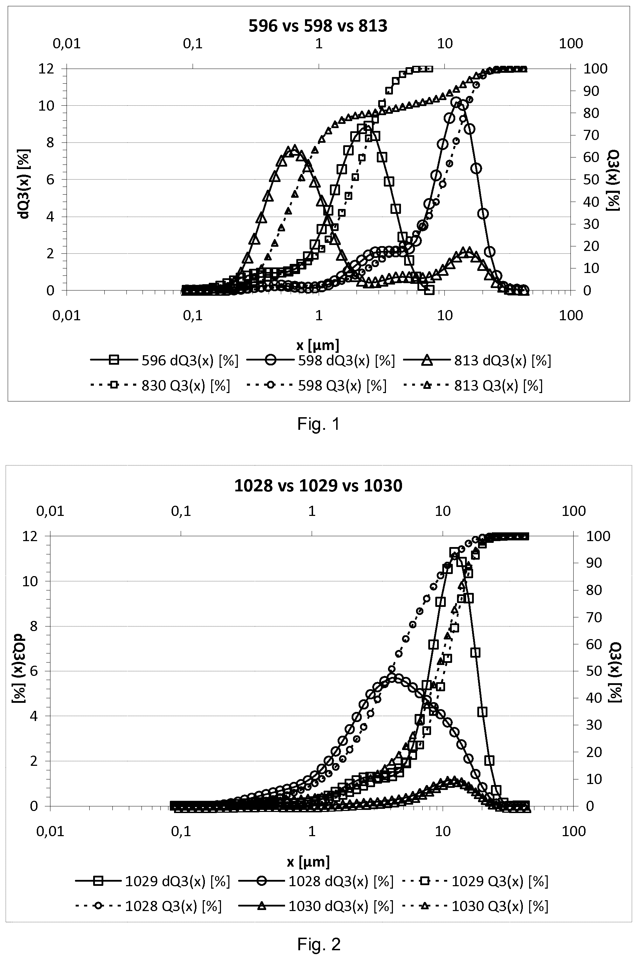

In einem weiteren Experiment wurden die Verfahren bei 220°C durchgeführt, wobei Tab. 4 die Ergebnisse der Laserlicht-Streuung in dem Teilbereich mit einer Obergrenze von 42 µm zeigt und Fig.1 die Diagramm-Darstellung der Werte für Q3(x) und dQ3(x) zeigt. Die Darstellung erfolgt (wie auch in den Figuren 2, 3 und 4) so, dass der Titel des Diagramms die miteinander verglichenen Messungen angibt, Kurven mit durchgezogenen Linien dQ3(x)-Werte und Kurven mit unterbrochenen Linien Q3(x)-Werte angeben.

**Tab. 4**

| Q3 (x) % | Messung 596 - Probe 3 (weich) | Messung 598 - Probe 11 (medium) | Messung 813 - Probe 19 (hart) |
|---|---|---|---|
| 10 | < 0,7 µm | < 2,5 µm | 0,3 µm |
| 50 | < 1,9 µm | < 10 µm | 0,7 µm |
| 90 | < 3,6 µm | < 17 µm | 11,6 µm |

Aus Tab. 4 geht hervor, dass unter diesen Bedingungen die bei Weichschaum erhaltene Aufschlämmung den größten Anteil an kleinen Partikeln unterhalb der Ausschlussgrenze von ca. 42 µm aufwies, da 90 % der Partikel eine Äquivalenzgröße von weniger als 3,6 µm hatten. Tatsächlich wurden bei der Messung keine Partikel mit mehr als 8 µm erfasst.

### Beispiel 2.3: Temperaturvergleich

In einem weiteren Experiment wurde PUR-Weichschaum bei 200 °C bzw. bei 220° C umgesetzt. Die Ergebnisse sind in Tab. 5 gezeigt.

**Tab. 5**

| Q3 (x) % | Messung 596 - Probe 3 (220 °C, weich) | Messung 636 - Probe 1 (200 °C, weich) |
|---|---|---|
| 10 | < 0,7 µm | < 0,8 µm |
| 50 | < 1,9 µm | < 2,9 µm |
| 90 | < 3,6 µm | < 9,6 µm |

Die Aufschlämmung der bei 220 °C umgesetzten Probe 3 enthielt insgesamt einen größeren Anteil an kleinen Partikeln, da 90% davon kleiner als 3,6 µm und 50% kleiner als 1,9 µm waren.

### Beispiel 2.4: Einfluss von Eisen

In einem weiteren Experiment wurde der Einfluss von Eisensalz auf die Partikelgrößen in den erhaltenen Aufschlämmungen untersucht, wobei PUR-Weichschaum bei Abwesenheit oder in Gegenwart von Eisensalz umgesetzt wurde. Die Ergebnisse sind in Tab. 6 gezeigt.

**Tab. 6**

| Q3 (x) % | Messung 636, TB Probe 1, weich, ohne Fe-Salz | Messung 812, TB Probe 5, weich, mit Fe-Salz |
|---|---|---|
| 10 | < 0,8 µm | < 0,9 µm |
| 50 | < 2,9 µm | < 3 µm |
| 90 | < 9,6 µm | < 11,8 µm |

Die Umsetzung in Abwesenheit von Eisensalz führte zu geringfügig größeren Partikelgrößen, die Umsetzung in Gegenwart von Eisensalz zu einer schmaleren Größenverteilung.

### Beispiel 2.5: Einfluss von Nanopartikeln

In einem weiteren Experiment wurde der Einfluss von Nanopartikeln auf die Partikelgrößen in den erhaltenen Aufschlämmungen untersucht, wobei PUR-Weichschaum in Gegenwart verschiedener Mengen von Nanopartikeln umgesetzt wurde. Die Ergebnisse sind in Tab. 7 gezeigt.

**Tab. 7**

| Q3 (x) % | Messung 829 - Probe ES.6 (0,66ml Fe-Nanopartikel) | Messung 830 - Probe ES.5 (0,33ml Fe-Nanopartikel) |
|---|---|---|
| 10 | < 0,5 µm | < 0,3 µm |
| 50 | < 10,3 µm | < 1,4 µm |
| 90 | < 18 µm | < 16,4 µm |

### Beispiel 2.6: Zerkleinerung von Partikeln

In einem weiteren Experiment wurde der Einfluss einer Zerkleinerung mit anschließender Größenfraktionierung untersucht, wobei weicher, mittelharter und harter PUR-Schaum jeweils in einem elektrischen Reaktor umgesetzt wurden. Die erhaltenen Aufschlämmungen wurden 45 min in einer Kugelmühle mit Keramikkugeln eines Durchmessers von 1,0 mm bis 1,6 mm gemahlen.

In einem Ansatz wurde die Probe danach 11 h bei 70°C in einem Heizofen und anschließend an der Luft in einem Abzug 4 Tage getrocknet. Danach wurden 0,1 g der getrockneten Probe in 100 ml Isopropanol aufgenommen, 1 h auf einem Magnetrührer gerührt und anschließend über Laserlicht-Streuung untersucht. Die Ergebnisse sind in sind in Tab. 8 und Fig. 2 gezeigt.

In einem Ansatz wurde die Probe nach dem Mahlen ebenfalls 11 h bei 70°C in einem Heizofen und anschließend an der Luft in einem Abzug 4 Tage getrocknet. Danach wurden 0,5 g Probe mit 50 ml 99% Aceton versetzt und 1 h auf einem Magnetrührer gerührt (falls erforderlich wurden 10 ml Aceton zugegeben und 5 min gerührt, um Aceton zu ergänzen. Anschließend erfolgte eine erste Zentrifugation für 65 min.

Der Überstand aus der ersten Zentrifugation wurde entnommen und das verbleibende Sediment mit 20 ml Aceton versetzt und 30 min auf einem Magnetrührer gerührt. Anschließend erfolgte eine zweite Zentrifugation über 65 min.

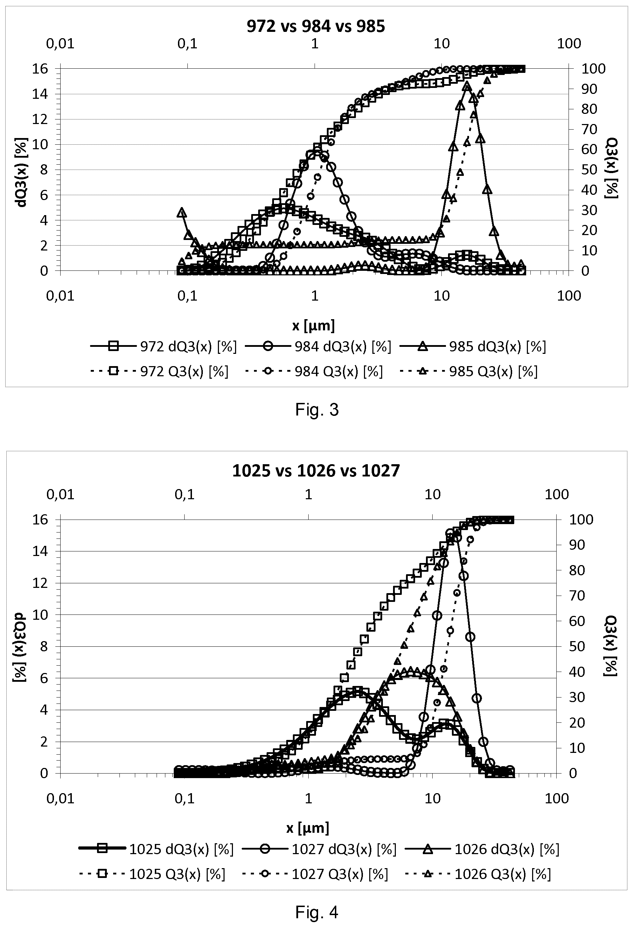

Der Überstand der zweiten Zentrifugation wurde entnommen, 2 ml davon wurden 1 h mit 50 ml Isopropanol auf einem Magnetrührer gerührt und anschließend über Laserlicht-Streuung untersucht. Die Ergebnisse sind in Tab. 9 und Fig. 3 gezeigt.

Vom Sediment der zweiten Zentrifugation wurden 1,3 mg mit 100 ml Isopropanol 1 h auf einem Magnetrührer gemischt und anschließend über Laserlicht-Streuung untersucht. Die Ergebnisse des Sediments sind in Tab. 10 und Fig. 4

**Tab. 8.**

| Q3 (x) % | Messung 1029, TB Probe ES 9, Aufschlämmung hart | Messung 1028, TB Probe ES 11, Aufschlämmung medium | Messung 1030, TB Probe ES 10, Aufschlämmung weich |
|---|---|---|---|
| 10 | < 3,2 µm | < 1,2 µm | < 2,7 µm |
| 50 | < 10,4 µm | < 4 µm | < 9,2 µm |
| 90 | < 17 µm | < 11,3 µm | < 16,1 µm |

Insgesamt die kleinsten Partikelgrößen wurden mit dem mittelharten PUR-Schaumstoff erzielt.

**Tab. 9**

| Q3 (x) % | Messung 972 , TB, Probe ES 9, hart Überstand 2 | Messung 984, TB Probe ES 10, medium Überstand 2 | Messung 985, TB Probe ES 11, weich Überstand 2 |
|---|---|---|---|
| 10 | < 0,3 µm | < 0,6 µm | < 0,1 µm |
| 50 | < 0,8 µm | < 1,1 µm | < 14,1 µm |
| 90 | < 3,9 µm | < 3,7 µm | < 21,1 µm |

Es zeigte sich, dass insbesondere bei PUR-Hartschaum und mittelhartem PUR-Schaum ein hoher Anteil an Partikeln von etwa 1 µm oder weniger erhältlich ist.

**Tab. 10**

| Q3 (x) % | Messung 1027 - Probe ES 9, TB hart Sediment 2 | Messung 1025 - Probe ES 11, TB medium Sediment 2 | Messung 1026 - Probe ES 10,TB weich Sediment 2 |
|---|---|---|---|
| 10 | < 8,2 µm | < 0,8 µm | < 2,1 µm |
| 50 | < 13,3 µm | < 2,6 µm | < 5,8 µm |
| 90 | < 19,6 µm | < 12,5 µm | < 13,5µm |

Es zeigte sich, dass insbesondere mittelharter PUR-Schaumstoff einen hohen Anteil an kleinen Partikeln hatte, da 90% der Partikel kleiner als 12,5 µm waren.

Insgesamt ließ sich der Anteil der Anteil kleinerer Partikel durch das Zerkleinern über Mahlen steigern, wobei teilweise Partikel im Submikrometerbereich erhalten wurden.

### Beispiel 2.7: Verringerung der Partikelgröße über Lösungsmittelzusatz

Identische Proben ES 7 wurden zugrunde gelegt. Ein Aliquot der Aufschlämmung aus dem elektrischen Reaktor wurde von den Papierfilter mit einer Ausschlussgröße von 125 µm filtriert, anschließend 20 Minuten bei 13 g zentrifugiert. Ein Teil des Überstandes wurde durch einen auf eine Spritze aufgesteckten Nanofilter mit einer Ausschlussgrenze von 0,2 µm filtriert und das Retentat für die Größenmessung verwendet. Ein weiteres Aliquot der Aufschlämmung wurde in einem (Sanplatec) 48 Stunden im Vakuum getrocknet. Anschließend wurden Aliquots des getrockneten Rückstands jeweils über Siebe mit einer Porengröße von 63 µm, 125 µm oder 200 µm gesiebt, die jeweiligen, auf den Sieben zurückgehaltenen Anteile danach 1 h mit Isopropanol gemischt und danach für die Größenmessung verwendet. Die Ergebnisse sind in Tab. 11 gezeigt.

**Tab. 11**

| Q3 (x) % | Messung 548 Probe ES 7 (Nanofilter) | Messung 539 Probe ES 7 (63 µm) | Messung 638 Probe ES 7 (125 µm) | Messung 640 Probe ES 7 (200 µm) |
|---|---|---|---|---|
| 10 | < 8,6 µm | < 6,8 µm | < 4,1 µm | < 2,7 µm |
| 50 | < 13,2 µm | < 12,3 µm | < 11,7 µm | < 10,7 µm |
| 90 | < 19,4 µm | < 18,6 µm | < 18,2 µm | < 17,6 µm |

Aus den Ergebnissen geht hervor, dass mit zunehmender Ausschlussgröße des verwendeten Siebs oder Filters der Anteil an Partikeln mit geringer Größe steigt. Zu erwarten wäre der höchste Anteil an Partikeln mit geringer Größe in der Probe aus dem Nanofilter, da dort eine relativ höhere Anzahl an Partikeln mit geringerer Größe zurückgehalten würde. Jedoch wurden die Proben, die über den Nanofilter fraktioniert wurden, in ihrem ursprünglichen wässrigen Reaktionsmedium bzw. Reaktionsabwasser belassen, während die Proben, die über Siebe hinsichtlich ihrer Größe fraktioniert wurden, in Isopropanol aufgenommen wurden. Ohne auf eine Theorie festgelegt sein zu wollen wird angenommen, dass das organische Lösungsmittel das Aufbrechen von aus kleinen Partikeln zusammengesetzten Agglomeraten einer entsprechenden großen Endgröße förderte und somit kleine Partikel freisetzte.

### Beispiel 2.8: Rasterelektronenmikroskopie

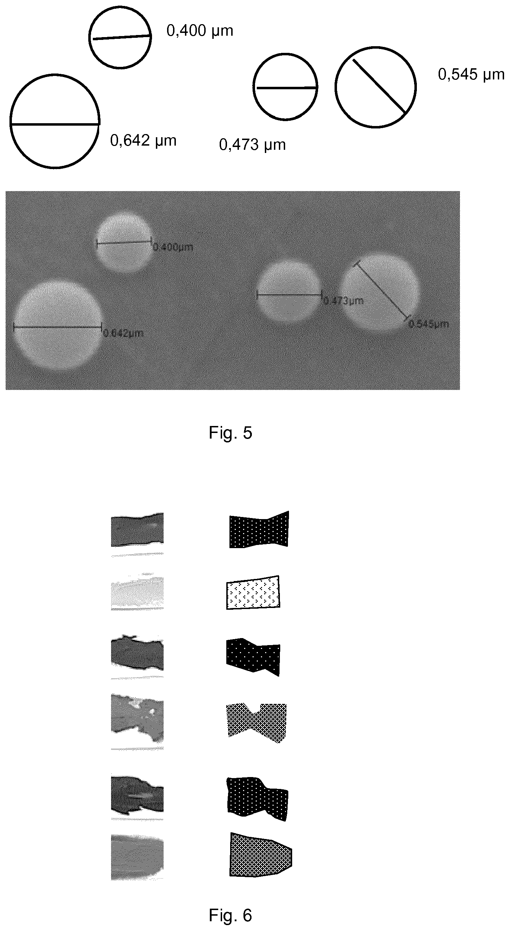

Fig. 5 zeigt eine rasterelektronenmikroskopische Aufnahme sphärischen Partikeln aus Probe 19. Eine Teilfigur zeigt die Originalaufnahme, die daneben befindliche Figur eine schematische Darstellung. Die sphärischen Partikel weisen Durchmesser von 0,4 bis 0,6 µm auf und befinden sich auf der Oberfläche eines noch größeren Partikels, von dem sie freisetzbar sind, wobei die Freisetzung wie hierin beschrieben insbesondere durch Behandlung mit Lösungsmitteln gefördert werden kann.

### Beispiel 3 - Herstellung von Farbzusammensetzungen, enthaltend erfindungsgemäße Partikel

Zur Herstellung von Farbzusammensetzungen wurden gemahlene Proben mit im Handel erhältlichem Klarlack der Marke "Vectra®" (J.W. Ostendorf GmbH & Co. KG, Coesfeld, Deutschland) bzw. Weißlack der Marke "Alpina®" (Alpina Farben GmbH, Ober-Ramstadt, Deutschland) gemischt. Der Klarlack enthielt Reinacrylatdispersion, Wasser, Hilfsstoffe und Konservierungsmittel (Isothazolinonderivate), der Weißlack Polyurethan/Acrylharz, Titandioxid, anorganische und organische Pigmente, mineralische Füllstoffe, Wasser, Glykole, Ester, Alkohole, Hilfsstoffe und Konservierungsmittel (Methylisothiazolinon/Benzisothiazolinon).

### Beimischung von gemahlenen Partikeln

Zur Herstellung einer Farbzusammensetzung wurden 1 g des Klarlacks bzw. des Weißlacks mit 0,14 g Partikeln aus gemahlenen Proben als Ruß-Ersatz gemischt. Fig. 6 zeigt von oben nach unten die Beimischung von Partikeln, wobei zunächst Aufschlämmung in einer Kugelmühle für 45 min gemahlen und anschließend 11 h bei 70°C und 4 Tage in einem Abzug getrocknet wurde. Es wurden jeweils Partikel der Proben
- ES9 zu Klarlack
- ES9 zu Weisslack
- ES11 zu Klarlack
- ES11 zu Weisslack
- ES10 zu Klarlack
- ES10 zu Weisslack
gegeben, auf einen weißen Untergrund (Papier) aufgetragen. Fig. 5 zeigt auf der linken Seite Fotografien der Proben, auf der rechten Seite den ungefähren Grad an Dunkeltönung nach visueller Einschätzung. Der zugrundeliegende Klarlack ist würde auf dem weißen Untergrund einen farblosen Fleck bilden, der zugrundeliegende Weisslack eine weißen Fleck. Die Ergebnisse aus Fig. 6 sind in Tabelle 12 nach visueller Beurteilung zusammengefasst:

**Tab. 12**

| Probe | Behandlung | Lack | Erhaltene Farbe | Deckvermögen |
|---|---|---|---|---|
| ES.9C | Gemahlen und getrocknet | Klarlack | dunkelbraun | ++ |
| ES.9C | Gemahlen und getrocknet | Weißlack | Beige | ++ |
| ES11.C | Gemahlen und getrocknet | Klarlack | dunkelbraun | ++ |
| ES11.C | Gemahlen und getrocknet | Weißlack | Dunkelbeige | ++ |
| ES10.C | Gemahlen und getrocknet | Klarlack | schwarzbraun | ++ |
| ES10.C | Gemahlen und getrocknet | Weißlack | graubraun | ++ |

Es zeigte sich, dass in allen Fällen ein gutes Deckvermögen erzielbar war, die Farbe des Lacks, dem die Partikel und damit der Ruß-Ersatz zugesetzt wurden, modifizierbar war, und verschiedene Farbtöne erzielbar waren.

### Beispiel 4 - Bioverträglichkeitsmessung durch Vermeidungstest

Zur Bestimmung der Bio Verträglichkeit wurden Vermeidungstests mit Kompostwürmern *(Eisenia fetida)* durchgeführt. Das generelle Prinzip derartiger Vermeidungstests ist beispielsweise beschrieben in Hund-Rinke K., Wiechering H., Earthworm avoidance test for soil assessment: An alternative for acute and reproduction tests. 1:15-20 (2000), und im Testprotokoll "Test Protocol EU Waste Ringtest 2006/2007: Acute test with earthworms (Eisenia fetida or Eisenia andrei)" des Umweltbundesamtes (ecotoxwasteringtest.uba.de/h14/resources/SOP_Earthworm.pdf). Da bei sollte das Vermeidungsverhalten von Kompostwürmern nach 24-stündigem Kontakt mit Boden, dem ein Prozent erfindungsgemäßer Partikel zugemischt waren, im Vergleich zu natürlicher Gartenerde oder künstlicher Erde (LUFA) ermittelt werden. Das Ergebnis gibt Aufschluss über die Bio-Verträglichkeit der erfindungsgemäßen Partikel, und damit auch über deren Verwendbarkeit beispielsweise in Farbzusammensetzungen oder kosmetischen Produkten. Folgende Versuchsparameter wurden gewählt:
- Konzentration von Partikeln des kohleähnlichen Feststoffs: 1 %
- Testtöpfe: 45 (15 verschiedene Proben in Triplikaten)
- Individuen pro Topf: 10
- Wassergehalt: 40-60 %
- Temperatur: 18-22 °C
- Lichtbedingungen: 16 Stunden Licht (400-800 Lux), 8 Stunden Dunkelheit gemäß Standard ISO 17512
- Futterzugabe: nein
- Menge an Substrat/Topf:200 g Trockengewicht 100 g Kontroll-Gartenerde/100 g Erde mit 1 % kohleähnlichem Feststoff)
- Validitätskriterien: Mortalität 10 % pro Testtopf; Verteilung auf beiden Seiten bei demselben Boden: 50 ± 10 %
- Beurteilungskriterien: bei Vermeidung des Testbodens durch die Organismen von mehr als 80 % Einordnung des Testbodens als "eingeschränkte Habitatfunktion aufweisend".

Es wurden drei Kontroll-Testtöpfe verwendet (Kontrolle 1:100 % Gartenerde, Kontrolle 2: 100 % künstliche Erde (LUFA), Kontrolle 3: 50 % Gartenerde/50 % künstliche Erde. Nach Herstellung der Aufschlämmungen von Partikeln des kohleähnlichen Feststoffs wurde nach Absetzen der flüssige Überstand der Aufschlämmung abpipettiert, das Sediment einige Stunden bei 105 °C getrocknet, manuell gemahlen und homogen mit der Kontroll-Gartenerde vermischt. Die Gartenerde war erhalten worden als Erde aus dem Garten des Umwelt-Campus Birkenfeld der Hochschule Trier, wobei zunächst große Steine und sichtbare Organismen entfernt wurden, die Gartenerde 94 Stunden bei 40 °C getrocknet wurde, anschließend manuell gemahlen und schließlich durch ein Sieb mit einer Maschenweite von 2 mm gesiebt wurde. Die Befüllung der Testtöpfe erfolgte wie folgt:
- Auslegen der Torfböden mit einem feuchten Papierfilter
- Teilung des Testtopf-Innenraums in zwei Hälften durch eine Trennwand aus Pappe
- Zugabe von 100 g getrockneter Kontroll-Erde auf der linken Seite
- Zugabe von 100 g Gartenerde mit einer zu Mischung von ein Prozent Partikeln
- Einstellung einer Bodenfeuchte von 40-60 % durch Zugabe von Wasser
- Entnahme der Trennwand und Auflösung der Trenngrenze
- Legen von 10 Kompostwürmern ins Zentrum jedes Testtopfs
- Abdecken der Testtöpfe mit dünnem Stoff für den Zutritt von Luft
- Aufbewahren der Testtöpfe in einem Labor mit kontrollierten Bedingungen (Licht, Feuchtigkeit und Temperatur).

Die Ergebnisse sind in den nachfolgenden Tabellen 13 bis 15 gezeigt, wobei die Spalte "1 %" die Topfseite mit der Gartenerde mit Zumischung erfindungsgemäßer Partikel zeigt, "K" die Topfseite mit reine Gartenerde als Kontrolle und "Mitte" einen Mittelbereich zwischen beiden Hälften. In den Spalten "A", "B" und "C" sind die Einzelergebnisse der jeweiligen Töpfe der Triplikate gezeigt, in der Spalte "Mittel" der jeweilige Mittelwert. Tabelle 13 zeigt die Ergebnisse für PUR-Weichschaum, Tabelle 14 die Ergebnisse für mittelharten PUR-Schaumstoff, Tabelle 15 die Ergebnisse für PUR- Hartschaumstoff und Tabelle 16 die Ergebnisse für die Kontroll-Testöpfe.

**Tab. 13**

| | **Probe 1** | | | **Probe 2** | | | **Probe 3** | | | **Probe 4** | | |
|---|---|---|---|---|---|---|---|---|---|---|---|---|
| | **1%** | **K** | **Mitte** | **1%** | **K** | **Mitte** | **1%** | **K** | **Mitte** | **1%** | **K** | **Mitte** |
| **A** | 2 | 8 | | 3 | 4 | 3 | 3 | 4 | 3 | 2 | 1 | 8 |
| **B** | 3 | 6 | | 4 | 3 | 3 | 1 | 5 | 4 | 6 | 3 | 3 |
| **C** | 5 | 3 | 2 | 4 | 5 | | 3 | 4 | 3 | 6 | | |
| **Mittel** | 3 | 6 | 1 | 4 | 4 | 2 | 2 | 4 | 3 | 5 | 1 | 5 |

**Tab .14**

| | **Probe 9** | | | **Probe 10** | | | **Probe 11** | | | **Probe 12** | | |
|---|---|---|---|---|---|---|---|---|---|---|---|---|
| | **1%** | **C** | **Mitte** | **1%** | **C** | **Mitte** | **1%** | **C** | **Mitte** | **1%** | **C** | **Mitte** |
| **A** | 2 | 4 | 4 | 2 | 6 | 2 | 4 | 3 | 3 | 6 | 2 | 2 |
| **B** | 6 | 2 | 2 | 3 | 1 | 4 | 5 | 2 | 3 | 5 | 5 | |
| **C** | 5 | 3 | 2 | 5 | 2 | 3 | 7 | 3 | | 6 | 1 | 3 |
| **Mittel** | 4 | 3 | 3 | 3 | 3 | 3 | 5 | 3 | 2 | 6 | 3 | 2 |

**Tab. 15**

| | **Probe 17** | | | **Probe 18** | | | **Probe 19** | | | **Probe 20** | | |
|---|---|---|---|---|---|---|---|---|---|---|---|---|
| | **1%** | **C** | **Mitte** | **1%** | **C** | **Mitte** | **1%** | **C** | **Mitte** | **1%** | **C** | **Mitte** |
| **A** | 9 | 1 | | 4 | 4 | 2 | 6 | 4 | | 5 | 4 | 1 |
| **B** | 7 | 4 | | 5 | 1 | 4 | 2 | 4 | 4 | 3 | 5 | 2 |
| **C** | 5 | 3 | 2 | 3 | 5 | 2 | 7 | 1 | 2 | 2 | 4 | 3 |
| **Mittel** | 7 | 3 | 1 | 4 | 3 | 3 | 5 | 3 | 2 | 3 | 4 | 2 |

**Tab 16**

| **Kontrolle 1** | | | | **Kontrolle 2** | | | **Kontrolle 3** | | |
|---|---|---|---|---|---|---|---|---|---|
| | **GE** | **GE** | **Mitte** | **LUFA** | **LUFA** | **Mitte** | **GE** | **LUFA** | **Mitte** |
| **A** | 9 | 1 | | 4 | 4 | 2 | 6 | 4 | |
| **B** | 7 | 4 | | 5 | 1 | 4 | 2 | 4 | 4 |
| **C** | 5 | 3 | 2 | 3 | 5 | 2 | 7 | 1 | 2 |
| **Mittel** | 7 | 3 | 1 | 4 | 3 | 3 | 5 | 3 | 2 |

Der Test wurde als valide angesehen, da kein einziger Kompostwurm nach deren 20 Stunden in einer der Proben tot aufgefunden wurde. Eine Vermeidung der Partikel enthaltenden Erde durch Kompostwürmer konnte nicht festgestellt werden.

Während in der vorhergehenden Beschreibung und den Beispielen wenigstens eine beispielhafte Ausführungsform offenbart wurde, ist es verständlich, dass eine Vielzahl von Variationsmöglichkeiten existiert. Es wird nochmals darauf hingewiesen, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr ermöglicht es die vorhergehende Beschreibung dem Fachmann, die beispielhaften Ausführungsformen konkret umzusetzen, wobei der Fachmann in Kenntnis des offenbarten Erfindungsgedankens vielfältige Modifikationen vornehmen kann, ohne den Schutzbereich zu verlassen, der durch die Ansprüche und deren rechtliche Entsprechungen, wie etwa weitergehenden Ausführungen in der Beschreibung, definiert wird.

### Gewerbliche Anwendbarkeit

Das beschriebene Verfahren eignet sich zur Umsetzung von Kunststoffmaterial, insbesondere zur umweltschonenden und wertschöpfenden Nutzung von Abfällen oder Produktionsrückständen. Die gewonnen Aufschlämmungen von Partikeln und die Partikel selbst haben vielfältige Anwendungsmöglichkeiten und können als Produkte oder als Ausgangsmaterial für die Herstellung von Produkten verwendet werden.

## Patentansprüche

1. Verfahren zur Herstellung von Partikeln eines kohleähnlichen Feststoffs, wobei man ein wässriges Reaktionsgemisch, das ein Kunststoffmaterial, enthaltend einen oder mehrere hydrolysierbare Kunststoffe, ausgewählt unter Polyurethanen und/oder Polyestern, und weiterhin biologisches Material umfasst, wobei das Gewichtsverhältnis von Kunststoffmaterial zu biologischem Material 750:1 bis 1,5:1 beträgt, bei einem Druck von 2 bis 60 Bar und einer Temperatur von 195°C bis 225°C in Gegenwart eines Katalysators, der ausgewählt ist unter einer Säure, einer Base und/oder einem Katalysator auf Metallbasis oder Schwefelbasis, über einen Zeitraum von 0,1 bis 48 Stunden umsetzt und die erhaltene Aufschlämmung von Partikeln eines kohleähnlichen Feststoffs gewinnt und die Partikel in der Aufschlämmung, oder die Partikel nach Verringerung des Wassergehalts der Aufschlämmung, wenigstens einem Zerkleinerungsschritt unterwirft, der ausgewählt ist unter:
- Zusetzen eines organischen Lösungsmittels, das ausgewählt ist unter n-Propanol, Isopropanol, Aceton, 1-Butanol, 2-Butanol, Diethylether, Dimethylether, Benzol, Toluol oder Xylol, oder Gemischen zweier oder mehrerer Vertreter davon.

2. Verfahren nach Anspruch 1, **dadurch gekennzeichnet, dass** zum Erhalt einer Aufschlämmung von Partikeln oder von Partikeln mit einem erhöhten Anteil an kleineren Partikeln das organische Lösungsmittel ausgewählt ist unter n-Propanol, Isopropanol, Aceton oder einem Gemisch zweier oder mehrerer Vertreter davon.

3. Verfahren nach einem der vorhergehenden Ansprüche, **dadurch gekennzeichnet, dass** eine Größenfraktionierung der Partikel des kohleähnlichen Feststoffs vorgenommen wird.

4. Verfahren nach einem der vorhergehenden Ansprüche, wobei
a) der Wassergehalt der gewonnenen Aufschlämmung verringert wird,
b) die nach Verringerung des Wassergehalts erhaltenen Partikel einem Zerkleinerungsschritt unterworfen werden,
d) den Partikeln ein organisches Lösungsmittel zugesetzt wird,
e) mit den Partikeln im organischen Lösungsmittel eine Größenfraktionierung vorgenommen wird, und erhaltene Größenfraktionen voneinander getrennt werden,
und
g) die erhaltenen Partikel gewonnen werden.

5. Verfahren nach einem der Ansprüche 1 bis 3, wobei
b) Aufschlämmung einem Zerkleinerungsschritt unterworfen wird,
c) für den Fall, dass eine Aufschlämmung vorliegt, deren Wassergehalt unter Erhalt der Partikel verringert wird,
d) den Partikeln ein organisches Lösungsmittel zugesetzt wird,
e) mit den Partikeln im organischen Lösungsmittel eine Größenfraktionierung vorgenommen wird, und erhaltene Größenfraktionen voneinander getrennt werden, und
g) die erhalten Partikel gewonnen werden.

6. Verfahren nach Anspruch 4 oder Anspruch 5, wobei in einem Schritt f) nach dem Schritt e) und vor dem Schritt g) den Partikeln der erhaltenen Größenfraktionen erneut ein organisches Lösungsmittel zugesetzt wird.

7. Verfahren nach einem der vorhergehenden Ansprüche, **dadurch gekennzeichnet, dass** das Kunststoffmaterial Polyester, Polyurethan, Polyurethan-Weichschaum, Polyurethan-Hartschaum, mittelharten Polyurethan-Schaum, Integral-Hartschaum, Schredderleichtfraktion, oder eine Mischung zweier oder mehrerer Vertreter davon umfasst.

8. Verfahren nach einem der vorhergehenden Ansprüche, wobei das Kunststoffmaterial entweder:
- Polyurethan-Weichschaum oder Polyurethan-Hartschaum umfasst oder daraus besteht und die Umsetzung in einem Temperaturbereich von 218 °C bis 222°C erfolgt; oder
- Polyurethan-Hartschaum umfasst oder daraus besteht und die Umsetzung in einem Temperaturbereich von 198 °C bis 202°C erfolgt; oder
- mittelharten Polyurethanschaum umfasst oder daraus besteht und die Umsetzung in einem Temperaturbereich von 198 °C bis 202°C erfolgt, gefolgt von einer mechanischen Zerkleinerung, einer optionalen Verringerung des Wassergehalts, und einem Zusetzen eines organischen Lösungsmittels, optional gefolgt von einer Zentrifugation zur Größenfraktionierung mit anschließender Trennung des Sediments und des Überstands und einem Zusetzen eines organischen Lösungsmittels jeweils zum Sediment und zum Überstand.

9. Verfahren nach einem der vorhergehenden Ansprüche, **dadurch gekennzeichnet, dass** das biologische Material ausgewählt ist unter Zellulose, Stärke, zellulose- oder stärkehaltigen Materialien, Klärschlamm, Klärschlammkohle, zellulose- oder stärkehaltigen Biomassen, Jatropha, Pflanzenresten, insbesondere Laub, Speiseresten, oder Mischungen zweier oder mehrerer Vertreter davon.

10. Verfahren nach einem der vorhergehenden Ansprüche, **dadurch gekennzeichnet, dass** die Umsetzung in einem sauren pH-Bereich, insbesondere bei maximal pH 4,5, oder in einem basischen Bereich, insbesondere bei mindestens pH 8,5 erfolgt.

11. Verfahren nach einem der vorhergehenden Ansprüche, **dadurch gekennzeichnet, dass** ein Katalysator auf Metallbasis verwendet wird, der ausgewählt ist unter Eisensalzen und/oder Eisen-Nanopartikeln.

12. Aufschlämmung von Partikeln eines kohleähnlichen Feststoffs, erhalten über ein Verfahren nach einem der Ansprüche 1 bis 3 und 5 bis 11 ohne Verringerung des Wassergehalts, oder Partikel eines kohleähnlichen Feststoffs, erhalten über ein Verfahren nach einem der Ansprüche 1 bis 4 und 6 bis 11 nach Verringerung des Wassergehalts der Aufschlämmung, **dadurch gekennzeichnet, dass**
- wenigstens 90 % der Partikel eine maximale Größe von maximal 75 µm aufweisen, oder
- wenigstens 50 % der Partikel eine maximale Größe von maximal 25 µm aufweisen, oder
- wenigstens 10 % der Partikel eine maximale Größe von maximal 1 µm aufweisen, bezogen auf einen betrachteten Größenbereich von 80 nm bis 42 µm.

13. Ruß-Ersatz, umfassend eine Aufschlämmung oder Partikel eines kohleähnlichen Feststoffes gemäß Anspruch 12 oder bestehend aus einer Aufschlämmung oder aus Partikeln gemäß Anspruch 12.

14. Ruß-Ersatz nach Anspruch 13, umfassend 1 bis 99 Gewichtsprozent an Partikeln des kohleähnlichen Feststoffes, 99 bis 1 Gewichtsprozent Industrie-Ruß und optional einen Differenzbetrag zu 100 Gewichtsprozent, bereitgestellt von einem oder mehreren Zusatzstoffen.

15. Farbzusammensetzung, Füllstoff, Verstärkerfüllstoff, UV-Stabilisator, Leitfähigkeitsvermittler, Pigment, kosmetische Zusammensetzung, Baustoff, Kunststoff oder Kautschuk, umfassend Partikel oder eine Aufschlämmung von Partikeln gemäß Anspruch 12 oder einen Ruß-Ersatz nach einem der Ansprüche 13 bis 14.

16. Produkt, umfassend einen Kautschuk nach Anspruch 15.

17. Produkt nach Anspruch 16, ausgewählt unter Fahrzeugreifen, Kautschukmatten, Nässeschutzkleidung, Kautschukmatten, gummierten Planen, Dichtungen und Gummilagern.

## Claims

1. A process for the production of particles of a coal-like solid, wherein an aqueous reaction mixture which comprises a plastic material containing one or more hydrolysable plastics, selected from polyurethanes and/or polyesters, and furthermore comprises biological material, wherein the weight ratio of plastic material to biological material is 750:1 to 1.5:1, is reacted at a pressure of 2 to 60 bar and at a temperature of 195°C to 225°C in the presence of a catalyst which is selected from an acid, a base and/or a catalyst based on a metal or sulphur, over a time period of 0.1 to 48 hours, and the resulting slurry of particles of a coal-like solid is recovered and the particles in the slurry, or the particles after reduction of the water content of the slurry, undergo at least one comminution step which is selected from:
- adding an organic solvent which is selected from n-propanol, isopropanol, acetone, 1-butanol, 2-butanol, diethyl ether, dimethyl ether, benzene, toluene or xylene, or mixtures of two or more representatives thereof.

2. The process as claimed in claim 1, **characterized in that** in order to obtain a slurry of particles or of particles with an increased fraction of smaller particles, the organic solvent is selected from n-propanol, isopropanol, acetone or a mixture of two or more representatives thereof.

3. The process as claimed in one of the preceding claims, **characterized in that** a size fractionation of the particles of the coal-like solid is carried out.

4. The process as claimed in one of the preceding claims, wherein:
a) the water content of the recovered slurry is reduced,
b) the particles obtained after reduction of the water content undergo a comminution step,
d) an organic solvent is added to the particles,
e) a size fractionation is carried out with the particles in the organic solvent, and size fractions which are obtained are separated from each other,
and
g) the particles obtained are recovered.

5. The process as claimed in one of claims 1 to 3, wherein:
b) the slurry undergoes a comminution step,
c) in case a slurry is present the water content of said slurry is reduced to obtain particles,
d) an organic solvent is added to the particles,
e) a size fractionation is carried out with the particles in the organic solvent, and size fractions which are obtained are separated from each other,
and
g) the particles obtained are recovered.

6. The process as claimed in claim 4 or claim 5, wherein in a step f), after the step e) and before the step g), an organic solvent is again added to the particles of the size fractions obtained.

7. The process as claimed in one of the preceding claims, **characterized in that** the plastic material comprises polyester, polyurethane, soft polyurethane foam, hard polyurethane foam, medium-hard polyurethane foam, integral hard foam, shredder light fraction, or a mixture of two or more representatives thereof.

8. The process as claimed in one of the preceding claims, wherein the plastic material either:
- comprises or consists of soft polyurethane foam or hard polyurethane foam and wherein the reaction is carried out in a temperature range of 218°C to 222°C; or
- comprises or consists of hard polyurethane foam and wherein the reaction is carried out in a temperature range of 198°C to 202°C; or
- comprises or consists of medium-hard polyurethane foam and wherein the reaction is carried out in a temperature range of 198°C to 202°C, followed by a mechanical comminution, an optional reduction of the water content, and addition of an organic solvent, optionally followed by centrifuging in order to carry out size fractionation with subsequent separation of the sediment and the supernatant and addition of an organic solvent to both the sediment and to the supernatant.

9. The process as claimed in one of the preceding claims, **characterized in that** the biological material is selected from cellulose, starch, cellulose or starch-containing materials, sewage sludge, sewage sludge coal, cellulose- or starch-containing biomasses, jatropha, plant residues, in particular foliage, food scraps, or mixtures of two or more representatives thereof.

10. The process as claimed in one of the preceding claims, **characterized in that** the reaction is carried out in an acidic pH range, in particular at a maximum pH of 4.5, or in a basic range, in particular at a minimum pH of 8.5.

11. The process as claimed in one of the preceding claims, **characterized in that** a catalyst based on a metal is used which is selected from iron salts and/or iron nanoparticles.

12. A slurry of particles of a coal-like solid, obtained by means of a process as claimed in one of claims 1 to 3 and 5 to 11 without reduction of the water content, or particles of a coal-like solid obtained by means of a process as claimed in one of claims 1 to 4 and 6 to 11 after reduction of the water content of the slurry, **characterized in that**:
- at least 90% of the particles have a maximum size of at most 75 µm, or
- at least 50% of the particles have a maximum size of at most 25 µm, or
- at least 10% of the particles have a maximum size of at most 1 µm,
with respect to an observed size range of 80 nm to 42 µm.

13. A carbon black substitute comprising a slurry or particles of a coal-like solid as claimed in claim 12, or consisting of a slurry or of particles as claimed in claim 12.

14. The carbon black substitute as claimed in claim 13, comprising 1 to 99 percent by weight of particles of the coal-like solid, 99 to 1 percent by weight of industrial carbon black and optionally a difference up to 100 percent by weight provided by one or more additives.

15. A colour composition, filler, reinforcing filler, UV stabilizer, conductivity promoter, pigment, cosmetic composition, construction material, plastic or rubber, comprising particles or a slurry of particles as claimed in claim 12 or a carbon black substitute as claimed in claim 13 or claim 14.

16. A product comprising a rubber as claimed in claim 15.

17. The product as claimed in claim 16, selected from vehicle tyres, rubber mats, water protection clothing, rubber mats, rubberized tarpaulins, gaskets and rubber mountings.

## Revendications

1. Procédé de fabrication de particules d'une matière solide s'apparentant à du charbon, consistant à faire réagir, pendant une durée comprise entre 0,1 et 48 heures, un mélange réactionnel aqueux comprenant une matière plastique contenant une ou plusieurs matières plastiques hydrolysables choisies parmi les polyuréthanes et/ou les polyesters, et en outre une matière biologique, le rapport de poids entre la matière plastique et la matière biologique étant compris entre 750:1 et 1,5:1, sous une pression comprise entre 2 et 60 bar et à une température comprise entre 195 °C et 225 °C en présence d'un catalyseur choisi parmi un acide, une base et/ou un catalyseur à base de métaux ou à base de soufre, pour ainsi obtenir une suspension de particules d'une matière solide s'apparentant à du charbon et soumettre les particules au sein de ladite suspension, ou les particules telles qu'elles se présentent suite à une diminution de la teneur en eau de ladite suspension, à au moins une étape de réduction de la granulométrie choisie parmi:
- l'ajout d'un solvant organique choisi parmi le n-propanol, l'isopropanol, l'acétone, le 1-butanol, le 2-butanol, le diéthyl éther, le diméthyl éther, le benzène, le toluène ou le xylène, ou les mélanges constitués de deux ou de plusieurs des produits susmentionnés.

2. Procédé selon la revendication 1, **caractérisé en ce que**, pour obtenir une suspension de particules ou des particules comportant une proportion élevée de particules à plus faible granulométrie, on choisit ledit solvant parmi le n-propanol, l'isopropanol, l'acétone ou un mélangé constitué de deux ou de plusieurs des produits susmentionnés.

3. Procédé selon l'une des revendications précédentes, **caractérisé en ce que** l'on réalise un fractionnement des particules de la matière solide s'apparentant à du charbon, selon leur granulométrie.

4. Procédé selon l'une des revendications précédentes, consistant à
a) diminuer la teneur en eau de la suspension obtenue,
b) soumettre les particules, obtenues suite à la diminution de la teneur en eau, à une étape de réduction de la granulométrie,
d) ajouter un solvant organique auxdites particules,
e) réaliser, à partir desdites particules au sein dudit solvant organique, un fractionnement selon leur granulométrie pour ensuite séparer les fractions granulométriques obtenues,
et
g) récupérer les particules obtenues.

5. Procédé selon l'une des revendications 1 à 3, consistant à
b) soumettre la suspension à une étape de réduction de la granulométrie,
c) diminuer la teneur en eau de la suspension en préservant les particules si celles-ci se présentent sous une telle forme,
d) ajouter un solvant organique auxdites particules,
e) réaliser, à partir desdites particules au sein dudit solvant organique, un fractionnement selon leur granulométrie pour ensuite séparer les fractions granulométriques obtenues, et
f) récupérer les particules obtenues.

6. Procédé selon la revendication 4 ou la revendication 5, comportant une étape f), réalisée après l'étape e) et avant l'étape g), consistant à ajouter de nouveau un solvant organique aux particules des fractions granulométriques obtenues.

7. Procédé selon l'une des revendications précédentes, **caractérisé en ce que** ladite matière plastique comprend du polyester, du polyuréthane, de la mousse flexible de polyuréthane, de la mousse rigide de polyuréthane, la mousse semi-rigide de polyuréthane, de la mousse rigide à peau intégrale, des fractions légères issues d'un broyage, ou un mélange constitué de deux ou de plusieurs des produits susmentionnés.

8. Procédé selon l'une des revendications précédentes, la matière plastique comprenant ou étant constituée :
- soit de (la) mousse flexible de polyuréthane ou de (la) mousse rigide de polyuréthane, la réaction étant alors effectuée à des températures comprises entre 218 °C et 222 °C;
- soit de (la) mousse rigide de polyuréthane, la réaction étant alors effectuée à des températures comprises entre 198 °C et 202 °C;
- soit de (la) mousse semi-rigide de polyuréthane, la réaction étant alors effectuée à des températures comprises entre 198 °C et 202 °C, suivie d'une réduction mécanique de la granulométrie, d'une diminution optionnelle de la teneur en eau, et d'un ajout d'un solvant organique, suivies optionnellement d'une centrifugation visant à réaliser un fractionnement selon la granulométrie pour ensuite séparer le sédiment du surnageant et ajouter un solvant organique tant au sédiment qu'au surnageant.

9. Procédé selon l'une des revendications précédentes, **caractérisé en ce que** la matière biologique est choisie parmi la cellulose, l'amidon, les matières contenant de la cellulose ou de l'amidon, les boues d'épuration, le charbon de boues d'épuration, la biomasse contenant de la cellulose ou de l'amidon, le jatropha, les résidus végétaux, notamment les feuilles mortes, les restes de nourriture ou les mélanges constitués de deux ou de plusieurs des produits susmentionnés.

10. Procédé selon l'une des revendications précédentes, **caractérisé en ce que** ladite réaction est effectuée à un pH acide, notamment inférieur ou égal à pH 4,5, ou à un pH basique, notamment supérieur ou égal à pH 8,5.

11. Procédé selon l'une des revendications précédentes, **caractérisé en ce que** l'on utilise un catalyseur à base de métaux, choisi parmi les sels de fer et/ou les nanoparticules de fer.

12. Suspension de particules d'une matière solide s'apparentant à du charbon, obtenue au travers d'un procédé selon l'une des revendications 1 à 3 et 5 à 11, sans diminution de la teneur en eau, ou particules d'une matière solide s'apparentant à du charbon, obtenues au travers d'un procédé selon l'une des revendications 1 à 4 et 6 à 11, après avoir diminué la teneur en eau de ladite suspension, **caractérisée**(s) en ce que
- au moins 90 % des particules présentent une granulométrie maximale inférieure ou égale à 75 µm, ou
- au moins 50 % des particules présentent une granulométrie maximale inférieure ou égale à 25 µm, ou
- au moins 10 % des particules présentent une granulométrie maximale inférieure au égale à 1 µm, par rapport à une plage granulométrique allant de 80 nm à 42 µm.

13. Substitut de noir de carbone, comprenant une suspension ou des particules d'une matière solide s'apparentant à du charbon selon la revendication 12, ou constitué d'une suspension ou de particules selon la revendication 12.

14. Substitut de noir de carbone selon la revendication 13, comprenant 1 à 99 % en poids de particules de la matière solide s'apparentant à du charbon, 99 à 1 % en poids de noir de carbone industriel, l'éventuel complément pour atteindre les 100 % en poids pouvant être fourni par un ou plusieurs additifs.

15. Composition colorante, charge, charge renforçante, agent stabilisant contre les UV, agent de conductivité, pigment, composition cosmétique, matériau de construction, matière plastique ou caoutchouc, comprenant des particules ou une suspension de particules selon la revendication 12 ou un substitut de noir de carbone selon l'une des revendications 13 à 14.

16. Produit, comprenant un caoutchouc selon la revendication 15.

17. Produit selon la revendication 16, choisi parmi les pneus pour véhicules, les tapis en caoutchouc, les vêtements de protection contre l'humidité, les tapis en caoutchouc, les bâches revêtues de caoutchouc, les joints et les paliers en caoutchouc.
